# EUROPEAN PATENT APPLICATION

(11) **EP 3 007 084 A1**
(43) Date of publication of application: **13.04.2016**
(21) Application number: 14804034.8
(22) Date of filing: 28.05.2014
(51) Int. Cl.: G06F 17/30, G06F 3/01, G06F 3/14

(54) **USER INTERFACE METHOD AND DEVICE FOR SEARCHING FOR MULTIMEDIA CONTENT**

(30) Priority: 28.05.2013 KR 20130060502
(71) Applicant: Samsung Electronics Co., Ltd., Suwon-si, Gyeonggi-do 443-742 (KR)
(72) Inventor: CHEONG, Cheol-Ho, Seoul 120-834 (KR); SHIN, Sung-Hyuk, Seongnam-si Gyeonggi-do 463-953 (KR); YU, Bo-Hyun, Uiwang-si Gyeonggi-do 437-742 (KR); JOO, Jae-Seok, Seongnam-si Gyeonggi-do 461-708 (KR)
(74) Representative: Jenkins, Richard Gavin
(86) International application number: PCT/KR2014/004764
(87) International publication number: WO 2014/193161

(57) **Abstract**

Various embodiments of the present invention relate to a user interface method and device which are related to a method for inquiring into an inquiry and an inquiry result for searching for a desired scene on the basis of content in multimedia content such as video, the method for searching for content comprising the steps of: receiving an inquiry input for searching for content through a user interface; detecting, as inquiry results, at least one of partial content corresponding to the inquiry, by using description information associated with the content; determining a position for displaying the inquiry results, on the basis of play sections corresponding to each of the at least one of the partial content; determining the size of scene markers corresponding to the inquiry results or the size of areas for displaying the inquiry results, by considering the length of the partial content and/or a relative distance between the inquiry results; and displaying, at least partially, the at least one inquiry result according to the position and relevant size of the determined inquiry results.

## Description

### Technical Field

The present disclosure relates to a user interface technology for supporting a query input and a query result output to detect a desired frame, scene, or shot in multimedia contents and provide a user with the detected frame, scene, or shot.

### Background Art

With the development of computing technologies, creation of multimedia contents such as music, videos, images, and the like, and transmission and purchase of the multimedia contents have become easy and, accordingly, quantity and quality of the contents have very rapidly increased. For example, many images photographed by a person, recorded images, purchased music files, and downloaded movie files may be stored in electronic devices such as a smart phone, a Portable Multimedia Player (PMP), a tablet computer, a console game machine, a desktop computer, and the like, and contents may be searched for in each electronic device or contents of another electronic device connected through a wired/wireless communication means may also be searched for/shared. Further, a video may be searched for through a Video on Demand (VoD) service in real time or through access to a video sharing site such as Youtube through the Internet and the found video may be displayed.

Meanwhile, a video content technology applies high resolution and high sound quality multimedia contents to an encoding/decoding technology having a high compression rate.

As a result, user's desires for searching for numerous contents in an electronic device whenever and wherever the user likes and classifying and searching for a scene which the user wants grow, and an amount of data to be processed and complexity also grow.

### Disclosure

### Technical Problem

Accordingly, a Moving Picture Experts Group (MPEG)-7 standard is proposed as a representative description technique which can analyze multimedia contents and efficiently display an entirety or a part of the multimedia contents based on the analyzed content.

MPEG-7 is formally called a multimedia content description interface and corresponds to international standardization of a content expression scheme for a content-based search of multimedia data in MPEG under the International Organization for Standardization (ISO) and International Electrotechnical Commission (IEC) joint technical committee.

MPEG-7 defines the standard of a descriptor which can express content of Audio Visual (AV) data, a Description Scheme (DS) which defines a schema for systematically describing a structure of the AV data and semantic information, and a Description Definition Language (DDL) which is a language for defining the descriptor and the description scheme.

MPEG-7 deals with an expression method of the content of multimedia data, and may be largely divided into a content-based search for audio data including a voice or sound information, a content-based search for still image data including a picture or graphic, and a content-based search for video data including a video.

For example, a sample video frame sequence synchronized with an image or audio data may be described using ┌Sequential Summary DS┘ which is a kind of ┌Summary DS┘ (Description Scheme) within MPEG (Moving Picture Experts Group)-7. When a user makes a request for a sample video, an MPEG-7 document may be generated, converted into a Hypertext Mark-up Language (HTML) by an extensible Stylesheet Language (XSL), and shown in a web.

Through the technology such as MPEG-7, a metadata structure for expressing information on multimedia contents such as videos, audio data, images, and the like is defined and thus a result found according to various queries of the user can be provided using an MPEG-7 document generated according to the standard.

MPEG-7 is made by an extensible Markup Language (XML)-based document and is for describing attributes of the content of contents. Accordingly, a method of extracting or searching for the content of the contents is not provided, so that various methods of executing a query and searching for a search result are being developed.

When such technologies are applied, a movie trailer service may be provided based on a samples of the corresponding multimedia contents, or an index service including a short video or a service of searching for a desired scene may be provided. MPEG-7 corresponds to a representative contents content description method, but may use other description methods.

A video is encoded using a compression scheme and has a codec type such as MPEG, Windows Media Video (WMV), RealMedia Variable Bitrate (RMVB), MOV, H.263, H.264, and the like. A technology for recognizing and tracing an object in the compressed data may be processed using various pieces of information such as a motion vector included in the compressed data, a residual signal (Discrete Cosine Transform (DCT)), integer coefficients, and a macro block type. Such an algorithm may include a Markov Random Field (MRF)-based model, a dissimilarity minimization algorithm, a Probabilistic Data Association Filtering (PDAF) algorithm, a Probabilistic Spatiotemporal Macroblock Filtering (PSMF) algorithm, and the like.

Analysis elements of the image may include an outline, color, object shape, texture, form, area, still/moving image, volume, spatial relation, deformation, source and feature of an object, change in a color, brightness, pattern, character, sign, painting, symbol, gesture, time, and the like, and analysis elements of the audio data may include a frequency shape, audio objects, timbre, harmony, frequency profile, sound pressure, decibel, tempo content of a voice, a distance of a sound source, a space structure, timbre, length of a sound, music information, sound effect, mixing information, duration, and the like. Text includes a character, user input, type of a language, time information, contents-related information (producer, director, title, actor name, and the like), annotation, and the like.

Such information may be found alone or found together with information suitable for a situation in consideration of various pieces of information. For example, scenes in a video may be searched for only based on a male actor's name. Beyond that, however, if "a scene in which the actor sings a song of 'singing in the rain' while dancing with an umbrella in a rainy day" is searched for, a complex situation must be considered to find the corresponding scene through video image analysis and audio analysis. In this case, an actor image, a raining scene, an umbrella, and an action detection may be applied as descriptors to be found in the video track, a male voice pattern, a song, and content of a voice may be searched for in the audio track, and the phrase "singing in the rain" may be searched for in the text of the caption track. Accordingly, it is possible to analyze the query content to be found in each track to properly apply the query content in accordance with each of one or more tracks.

In general, video analysis uses a method of analyzing shots generating by successively collecting key frames and scenes having a semantic relation by a plurality of collected shots. The shot refers to photographing or recording without stopping until one camera ends the photographing from the beginning. The shots come together to form a scene, and a series of scenes come together to form a sequence. Based on image parsing, a relation between objects within the image, an object between images, a motion, and an image change may be analyzed, and information related to the image may be extracted. In a case of the audio data, the corresponding situation and a timestamp may be analyzed using speaker recognition, semantic voice recognition, sound-based emotion recognition, spatial impression, and the like. In a case of the caption, information may be analyzed and extracted through image analysis or text analysis according to cases where there is a caption in the image and a caption file separately exists, and the extracted information may be structuralized in MPEG7 or a similar scheme.

The extracted information may be found in various methods. Text may be input or information to be searched for may be input based on a scheme such as Query By Example (QBE), Query By Sketch (QBS), or voice recognition, and a desired scene, sound, or character is searched for, so as to determine a position that matches a situation. In the QBE, the user searches for and compares a desired image and a similar image. In the QBS, the user draws a desired entire image to find a similar image.

As a method of analyzing, querying, and searching for an image, very various technologies have been introduced. The method includes QBIC of IBM, Informedia of Carnegie Mellon University, photobook of MIT, VisualSeek of Columbia University, Chabot of Berkley University, US registered patent no. US7284188 of Sony, Korean registered patent no. KR10-0493635 of LG, Korean registered patent no. KR10-0941971 of ETRI, Automatic Metadata Generator (OMEGA) system of KBS technical research institute, video search engine blinkx (http://www.blinkx.com) of Blinkx, Like.com of Riya.com, and the like, and also includes others in addition to the above.

Various embodiments of the present invention provide a user interface method and apparatus related to a method of inputting a query and searching for a query result to find a desired scene based on content of multimedia contents such as a video.

Various embodiments of the present invention provide a method and an apparatus for displaying thumbnails or sample scene videos corresponding to one or more query results on a progress bar of a video (video chapter function) to allow a user to easily and intuitively grasp a temporal position and a length of a query result in the video, and searching for a desired scene in the query result on one screen.

Various embodiments of the present invention provide a method and an apparatus for performing an easy search by providing a magnifying glass function used when the number of query results is large and thus the query results are displayed as being very small on the screen or some of the query results are hidden and a navigation function for a focused query result and providing functions such as a preview and controlling a size of a search screen.

Various embodiments of the present invention provide a method and an apparatus for evaluating a matching degree of the query and differently providing a position to display the query result, a size, a graphic effect, and a sound effect according to the matching degree.

Various embodiments of the present invention provide a method and an apparatus for providing a convenient user interface to the user by executing the query through various schemes (image, music, screen capture, sketch, gesture recognition, voice recognition, face recognition, motion recognition, and the like).

Various embodiments of the present invention provide a method and an apparatus for storing the query result and, when the user asks for the same query result, displaying the query result again.

Various embodiments of the present invention provide a method and an apparatus for analyzing the content of contents according to each of a video track, an audio track, and a text track.

### Technical solution

According to various embodiments of the present invention, a method of searching for contents includes: receiving an input of a query for searching for a content of the contents through a user interface; detecting, as a result of the query, at least one partial content of the contents corresponding to the query by using a description related to the contents; determining a position to display the results of the query; determining a size of a scene marker corresponding to the result of the query or a size of an area to display the result of the query in consideration of at least one of a length of the partial content of the contents and a relative distance between the results of the query; and at least partially displaying one or more results of the query according to the determined position and related size of the result of the query.

According to various embodiments of the present invention, a method of inputting a user query for a content-based query in contents includes: setting contents to be searched for through a user input interface; setting a query for searching for a content of the contents to be searched for; searching for a partial content of the contents corresponding to the query as a query result by using description information related to the contents to be searched for; and displaying one or more detected query results based on a query matching degree.

According to various embodiments of the present invention, an electronic device includes: one or more processors; a memory; and one or more programs stored in the memory and configured to be executed by the one or more processors. The program includes commands for inputting a query for searching for a content of contents by using a user interface, detecting at least one partial content of the contents corresponding to the query as a query result by using description information related to the contents, determining a position to display the query result based on a play-back section corresponding to each of the at least one content of the contents, determining a size of a scene marker corresponding to the query result or a size of a window to display the query result in consideration of at least one of a length of the partial content of the contents and a relative distance between the query results, and at least partially displaying one or more query results according to the determined position of the query result and the determined related size.

According to various embodiments of the present invention, an electronic device includes: one or more processors; a memory; and one or more programs stored in the memory and configured to be executed by the one or more processors. The program includes commands for setting contents to be searched for through a user input interface, setting a query for searching for a content of the contents to be searched for, detecting a partial content of the contents corresponding to the query by using description information related to the contents to be searched for, and displaying one or more detected query results based on a query matching degree.

### Advantageous Effects

According to various embodiments of the present invention, with respect to multimedia contents such as a video, music, and the like, scenes are summarized or a main scene is formed as a thumbnail or a sample scene file to be provided in a preview form or full view.

### Brief Description of the Drawings

FIG. 1 illustrates a result screen of a video content search query according to various embodiments of the present invention;
FIG. 2 illustrates a video content search query result according to various embodiments of the present invention;
FIG. 3 illustrates an example of a method of searching for a particular scene in the video content search query result according to various embodiments of the present invention;
FIG. 4 illustrates a search method using a magnifying glass function in the result screen of the video content search query according to various embodiments of the present invention;
FIG. 5 illustrates a method of seeking a video content according to each track when the video content is searched for according to various embodiments of the present invention;
FIG. 6 illustrates a query interface screen for searching for a video content according to various embodiments of the present invention;
FIG. 7 illustrates an interface screen for a query method by image recognition according to various embodiments of the present invention;
FIG. 8 illustrates various query interface screens for searching for a video content according to various embodiments of the present invention;
FIG. 9 illustrates a screen for searching for a query result according to various embodiments of the present invention;
FIG. 10 is a flowchart illustrating a process in which an electronic device displays a query result according to various embodiments of the present invention;
FIG. 11 is a flowchart illustrating a process in which the electronic device displays a query result according to various embodiments of the present invention;
FIG. 12 is a flowchart illustrating a process in which the electronic device displays a query result according to various embodiments of the present invention; and
FIG. 13 is a block diagram of the electronic device according to various embodiments of the present invention.

### Best Mode for Carrying out the Invention

Hereinafter, various embodiments of the present invention will be described in detail with reference to the accompanying drawings. Further, in the following description of the present invention, a detailed description of known functions or configurations incorporated herein will be omitted when it may make the subject matter of the present invention rather unclear. The terms which will be described below are terms defined in consideration of the functions in the present invention, and may be different according to users, intentions of the users, or customs. Accordingly, the terms should be defined based on the contents over the whole present specification.

Various embodiments of the present invention will describe a user interface method and apparatus related to a method of executing a query and searching for a query result to find a desired scene based on a content in multimedia contents such as a video.

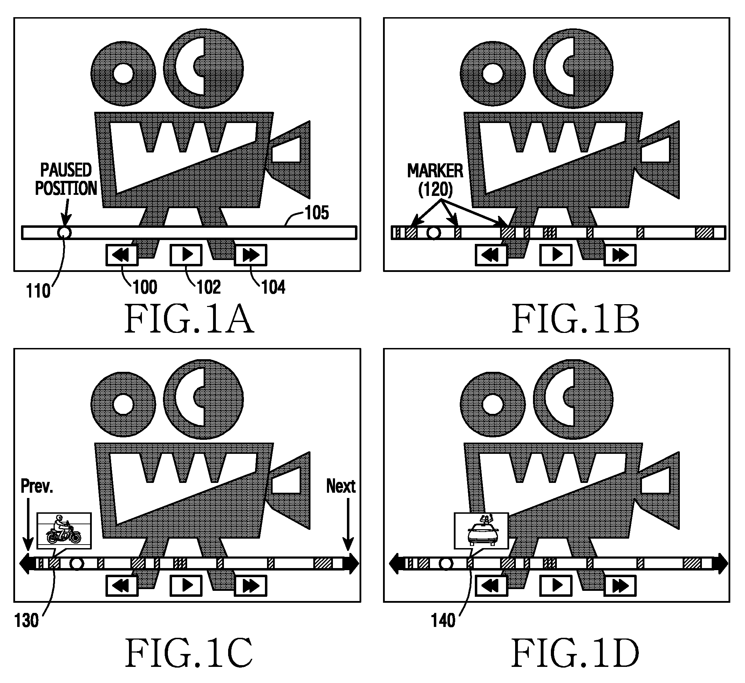

FIGs. 1(a) to 1(d) illustrate screens showing results of a video content search query according to various embodiments of the present invention.

FIG. 1(a) illustrates a general video user interface before a query is performed. During the play-back of the video, a play/stop button 102, a fast forward button 104, a rewind button 100, and a progress bar (or a progressive bar) 105 or a slide bar may appear. In FIG. 1(a), when the video is paused during the play-back, a screen is stopped. At this time, a progress status marker 110 may be displayed at a position on the progress bar 105 corresponding to the stopped screen.

Here, although the progress bar 105 is shown in a bar form, the progress bar 105 may have a spinner form which circularly spins. Further, according to various embodiments of the present invention, the progress bar 105 is not limited to the bar form or the spinner form, and may have forms of various shapes or sizes. The progress bar 105 is one of the Graphical User Interface (GUI) components for displaying a progress status of the video play-back. According to various embodiments, the progress bar 105 may be displayed together with a percentage.

When a query input is performed by a predetermined interface method (for example, text input, voice recognition, query image selection, and the like) in a stopped state or while the video is played, one of the examples illustrated in FIGs. 1(b) to 1(d) may be displayed as an embodiment of a result of the query. The user interface and method for inputting the query will be described later in more detail.

As illustrated in FIG. 1(b), search results corresponding to the query, for example, locations of a key frame, shot, or scene corresponding to the query may be displayed on the progress bar by using one or more scene markers. The scene markers may be displayed using a start position of the key frame, shot, or scene corresponding to the query. According to another embodiment, the scene marker may be variously displayed according to a duration of playtime including at least one of the key frame, the shot, or the scene corresponding to the query. That is, one of more of a length, size, and shape of the scene marker may be determined according to the position or the duration of playtime including at least one of the key frame, shot, or scene corresponding to the query. For example, as illustrated in FIGs. (b) to 1(d), the duration of playtime including at least one of the marker may be different according to the duration of playtime including at least one of the key frame, shot, or scene corresponding to the query. Here, a plurality of scene markers 120 correspond to the key frame, shot, or scene corresponding to the query, and each of the key frame, shot, and scene corresponding to the query may be displayed with a predetermined length or size at a corresponding position on the progress bar 105. For example, an area from a start position to an end position of each of the shot and the scene corresponding to the query may be displayed by the marker. In another example, the length or size of the marker may be different from the duration of playtime including at least one of the key frame, shot, or scene corresponding to the query. if the duration of playtime including at least one of the key frame, shot, or scene corresponding to the query is very short and thus it is difficult to display the key frame, shot, or scene on the progress bar 105, the key frame, shot, or scene may be displayed by a marker having a predetermined size larger than or equal to 1 pixel to make an easy display or user interface input. For example, when a stylus pen is used, a marker having the smaller number of pixels may be used compared to a case where an input is made by a finger touch.

According to another embodiment, when an interval between a plurality of key frames, shots, or scenes corresponding to the query, arranged on the progress bar is shorter than a predetermined length, one marker may display positions of the plurality of query results which are successively arranged.

According to another embodiment, when the length or the size of the marker corresponding to one query result B among key frames, shots, or scenes corresponding a plurality of queries is very short or small, the length or the size of the marker may be expanded to one predetermined point after an end position of query result A located before query result B and before a start position of query result C located after query result B. By limiting the length or the size of one marker, which can be displayed, it is possible to prevent one marker from being displayed as being too long or too large.

Meanwhile, in addition to displaying the key frame, shot, or scene corresponding to the query by the scene marker 120 on the progress bar 105, a matching degree between the query and the search result may be calculated and a color, size, or shape of the scene marker may be differently displayed according to the calculated matching degree. For example, "high" is assigned when the matching degree between the query and the search result is 70% or higher, "mid" is assigned when the matching degree is smaller than 70% and larger than 50%, and "low" is assigned when the matching degree is smaller than 50%. In this case, a visual effect may be given to a result classified as "high" of the matching degree so that the result would stick out. According to an embodiment, a striking color such as red, an animation effect such as a flicker, or a shape effect such as a star shape or a number may be given to a result having the matching degree higher than a predetermined reference or the size of a displayed thumbnail or a sample scene video thereof may become relatively larger. In contrast, when the matching degree is low, an unnoticed effect may be assigned through a dark color or transparency and the size of the displayed thumbnail or the sample scene video may be displayed as being smaller.

Information on the matching degree can be indicated by a change in a sound or haptic information as well as a visual change. According to an embodiment, the scene marker may be assigned scene marker attribute information such as making the result classified with a "high" matching degree more striking, making the volume of the sound thereof higher than or equal to a predetermined reference, or giving thereto a strong haptic effect higher than or equal to a predetermined reference. When an input such as a touch, hovering, drag, mouse pointing, or pen input is detected in the scene marker assigned the scene marker attribute by a user interface, a sound or haptic feedback corresponding to the attribute information may be output.

In an initial screen of the query result, only scene markers 120 are displayed as illustrated in FIG. 1(b) and then an image or a video content corresponding to a particular scene marker may be searched for through a separate user interface. For example, as illustrated in FIGs. 1(c) to 1(d), search results corresponding to the query may be displayed by a particular thumbnail or a particular sample scene video together with the scene markers 120. For example, FIG. 1(c) illustrates an example of an initial screen of the result of the query. A thumbnail or sample scene video corresponding to a position 130 of the scene marker which is closest to the current pause position 110 is displayed. In FIG. 1(d), a thumbnail or sample scene video corresponding to a scene marker 140 which is next closest to the current pause position 110 is displayed. When a next button icon is selected in the scene of FIG. 1(c), the marker may move to the next scene marker and the thumbnail or sample scene video corresponding to the next scene marker may be displayed as illustrated in FIG. 1(d) or otherwise when a prev button icon is selected in FIG. 1(d), the marker may move to the scene marker of FIG. 1(c). According to another embodiment, through the prev button icon 100 or the next button icon 104, the thumbnail or the sample scene video corresponding to the scene marker can be searched for.

Here, the thumbnail shown in the screen may be an image such as a representative image including a frame, scene, or shot corresponding to the result of the query, which is displayed as being smaller than an original image, to search for brief information. When the result of the query corresponds to at least two frames, one or more shots, or one or more scenes, the sample scene video is a video consisting of at least two frames acquired from the result of the query. The sample scene video may use or extract video or images included in the result of the query. For example, the shot or scene may be generated using image frames acquired after being extracted, at predetermined time intervals, from video frames included in the corresponding contents, or may include images acquired using various methods of collecting images at time points of main screen switching, like images having a rapid screen change including a color change, a motion change, a brightness change, or the like among video frames of the corresponding contents or collecting random images.

At this time, scene marker attributes such as a color, shape, size, and the like of the scene marker, which is currently searched for, may be changed and thus the scene marker may become more conspicuous. Further, through scene marker attributes such as a sound effect, a haptic effect, or a feedback through light during the play-back, various feedbacks may be provided to the user. According to an embodiment, at a time point corresponding to the query result during the play-back or a time point before a predetermined time, an alarm effect or a haptic effect may be given to allow the user to easily recognize the query result. Such effects may be variously used. When the query is made based on a name, of a particular actor, sports player, or singer, at least one of a sound, a haptic effect, or a flashing of a light emitting diode may make the user focus on the result when or before the scene in which the corresponding person appears starts during the play-back of video or audio data. According to another embodiment, when the scene corresponding to the query result is played, an audio volume may be automatically increased or an audio device may be activated in a mute mode. An opposite case is possible, that is, the mute mode may be activated in the scene which does not correspond to the query result. At least one of such schemes may be provided.

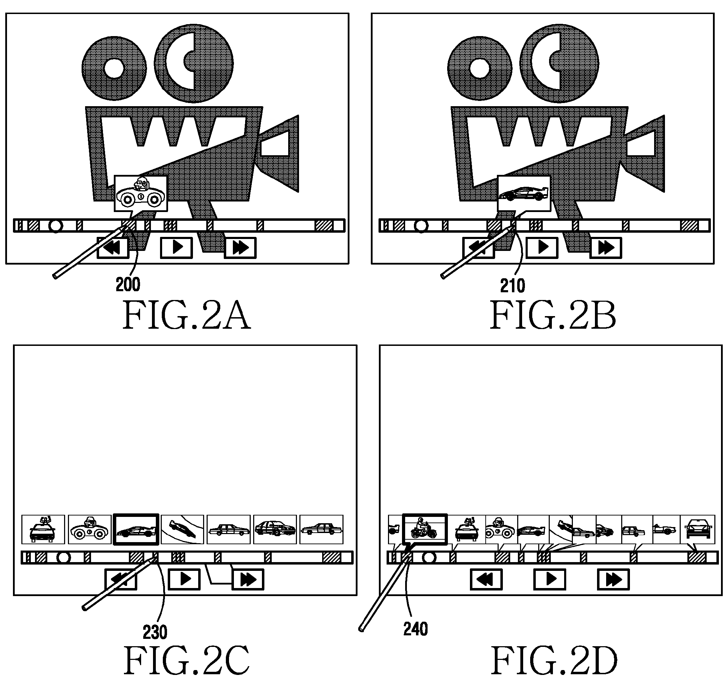

FIG. 2 illustrates a search screen of a video content search query result according to various embodiments of the present invention.

FIGs. 2(a) to 2(d) illustrate an example of a preview of a thumbnail or a sample scene video corresponding to a particular scene marker through pointing to the particular scene marker among the scene markers corresponding to the result of the query.

FIG. 2(a) illustrates an example of a preview of a thumbnail or a sample scene video corresponding to a particular scene marker 200 when the particular scene marker 200 is pointed to, and FIG. 2(b) illustrates an example of a preview of a thumbnail or a sample scene video corresponding to a particular scene marker 210 when the particular scene marker 210 is pointed to.

That is, when a touch is made by a pen or a finger, a scene marker, which is closest to a position of the center of a contact part is pointed to and, accordingly, a result associated with the corresponding scene marker 200 or 210 is generated. According to another embodiment, a pointing method may use a hovering function by means of a stylus pen, a finger, or the like. The hovering may refer to detecting a pointing position according to a distance between a pen or a hand and the surface of a touch screen even without a direct contact, and may be also called an air view, a floating touch, or the like. Through such a technology, a thumbnail or a sample scene video displayed together with the scene marker may be searched for in a hovering state and, when a corresponding position is selected or contacted, a seek function of an actual video player may be performed.

Accordingly, in a case of the thumbnail or the sample scene video close to the preview function, the hovering may be used to search for only the thumbnail or the sample scene video corresponding to the result of the query without any influence on a play-back status, unlike a click or touch designating a play-back position. For example, through a simple hovering over the progress bar before selecting one of the results of the query to actually play-back the video, each of the thumbnails or sample scene videos corresponding to each of the results of the query may be sought while being searched for, so that the hovering is useful for finding an actually desired position. The pointing method may be performed by one or more of pointing by a mouse, a joystick, or a thumb stick pointer, a mouse drag, a finger touch flick, an input of a gesture into a touch device, and voice recognition. By touching, hovering on, or pointing to the thumbnail or sample scene video, the corresponding thumbnail or sample scene video may be searched for or original contents may be played from the corresponding position.

FIGs. 2(a) and 2(b) provide a method of searching for the result of the query one by one through pointing, and FIG. 2(c) or 2(d) may provide a method of simultaneously searching for a plurality of results of the query. In a case of FIG. 2(c), thumbnails and sample scene videos, which can be displayed at regular sizes and intervals, may be displayed on the screen. In a case of FIG. 2(d), according to a method of displaying more thumbnails or sample scene videos, pieces of information (for example, thumbnail or sample scene video) corresponding to a currently pointed scene marker may be first displayed as having a highest priority and the remaining information may be displayed as having a low priority. For example, as the priority is higher, a display area or a display amount of the information may increase. Pieces of information corresponding to a scene marker having a low priority may be displayed to overlap each other. According to another embodiment, a thumbnail image or a sample scene video corresponding to a pointed scene marker 230 or 240 may be differentiated from other thumbnail or sample scene videos through a shadow effect on edges, a 3D effect, a change in an edge width or a shape, or a decoration, or a feedback may be given to the user together with a sound effect or a haptic effect when the thumbnail image or the sample scene video is pointed to.

When a plurality of scene markers are simultaneously displayed, displaying thumbnails or sample scene videos corresponding to the plurality of scene markers may be limited. To this end, the appropriate number of thumbnails or sample scene videos before and after the currently pointed scene marker may be displayed. For example, when ten thumbnails or sample scene videos can be displayed one screen, thumbnails or sample scene videos related to first to tenth scene markers may be displayed if the first scene marker on the left is pointed to, and thumbnails or sample scene videos related to sixth to fourteenth scene markers may be displayed if the tenth scene marker is pointed to. At this time, whenever pointing of the scene markers is sequentially changed, a range of displayed scene marker information may be changed, and the range may be changed at every predetermined number of scene markers. For example, when the second scene marker is pointed to (from the first scene marker), thumbnails or sample scene videos in a range of the fourth to thirteenth scene markers may be displayed by controlling a range of the seventh or eighth scene marker rather than displaying information on the second to eleventh scene markers.

According to another embodiment, when information on a plurality of scene markers (for example, thumbnails or sample scene videos related to scene markers) is displayed, one scene marker is designated by default to provide a pointing effect, so that a separate touch, hovering, or pointing by a pen may not be made. In this case, a scene marker to be searched for may be selected through the pointing, touch, or hovering, and scene markers may be sequentially searched for through the prev and next button icons of FIG. 1.

According to another embodiment, the pointed scene markers 200, 210, 230, and 240 among the plurality of scene markers may be assigned attribute information different from that of the scene markers which are not selected. For example, by assigning attributes such as a color, shape, size, animation, brightness, or the like to the pointed scene marker, the scene marker may have a visual difference from the other scene markers which are not selected.

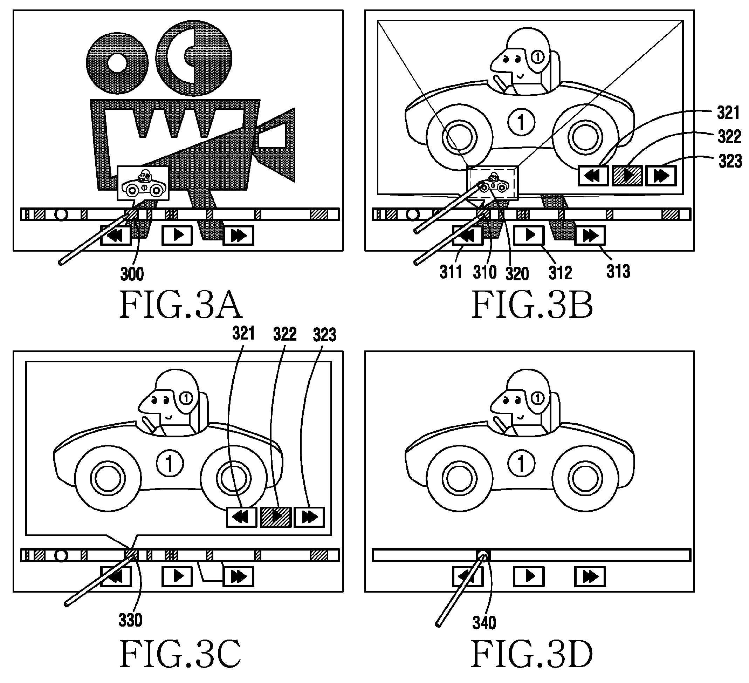

FIG. 3 illustrates an example of a method of searching for a particular scene in results of a video content search query according to various embodiments of the present invention.

FIGs. 3(a) to 3(d) are embodiments of various searches for a thumbnail and a sample scene video, wherein only a pointed sample scene video may be played while maintaining the corresponding size or play-back with a larger screen. According to an embodiment, a screen for searching for a thumbnail or a sample scene video may be switched to a larger screen while the thumbnail or the sample scene video is sought using the scene marker, and the play-back of the video may restart at the corresponding position later.

FIG. 3(a) illustrates a screen shown when one 300 of the scene markers corresponding to the result of the query is pointed to. A small thumbnail corresponding to the pointed scene marker may be switched to a large screen illustrated in FIG. 3(b) according to a user input. For example, when the hovering input for a particular scene marker is maintained for a predetermined time or the touch lasts for a predetermined time, an enlarged thumbnail or sample scene video may be displayed. At this time, the small thumbnail or sample scene video corresponding to the particular scene marker may be maintained and displayed or may disappear and not be displayed.

According to another embodiment, when the particular scene marker 310 is pointed to, a small thumbnail or sample scene video 320 corresponding to the particular scene marker 310 may be displayed and, when the displayed thumbnail or sample scene video 320 corresponding to the particular scene marker is hovered on or touched, an enlarged thumbnail or sample scene video may be displayed. When the enlarged thumbnail or sample scene video is displayed, the small thumbnail or sample scene video 320 corresponding to the particular scene marker may not be displayed. That is, only the enlarged thumbnail or sample scene video may be displayed on the screen. Meanwhile, when the enlarged thumbnail or sample scene video is displayed on the screen, a rewind button 321/play button 322/fast forward button 323 for the enlarged thumbnail or sample scene video may be displayed. For example, the rewind button 321 is a browse button for showing a previous thumbnail or sample scene video, the fast forward button 323 is a browse button for showing a next thumbnail or sample scene video, and the play button 322 may be used for a slide show function of sequentially showing thumbnails or sample scene videos at regular time intervals or pausing the showing of the thumbnails or sample scene videos.

According to another embodiment, the rewind button 321/play button 322/fast forward button 323 for the enlarged thumbnail or sample scene video may be replaced with buttons 311, 312, and 313 for searching for scene markers. That is, before the thumbnail or the sample scene video may be enlarged, the buttons 321, 322, and 323 are used as buttons for searching for scene markers. After the thumbnail or the sample scene video is enlarged, the buttons 311, 312, and 313 may be used as browse buttons for the enlarged thumbnail or sample scene video and used for the slide show function.

In FIG. 3(c) illustrates an example of a user interface of a screen shown in a window of the enlarged thumbnail or sample scene video corresponding to a scene marker 330. An interface shown on the lower end of the enlarged screen may receive a user input for controlling (for example, rewinding/playing/pausing/fast forwarding) the sample scene video. According to another embodiment, the interface may be used as an input interface for showing a previous and following thumbnail. The play button 322 may be used for the slide show function of sequentially showing thumbnails of results of the query at regular time intervals.

FIG. 3(d) illustrates a case where, when a query result search mode is released in a state where the enlarged thumbnail/sample scene video is displayed or a state before the thumbnail/sample scene video is enlarged, scene markers corresponding to the query result disappear and the video is paused at a position 340 of the selected scene marker, or the play-back of the video starts from the position 340 of the selected scene marker. The end of the search mode may be performed by particular input mode items such as a menu or a button. Alternatively, when a hovering ends or an input is not made until a predetermined time passes after the hovering ends, the end of the search mode may be performed if a particular event such as a double touch, a double click, a touch, a touch & hold, and the like is detected on the scene marker corresponding to the corresponding query result. The play-back of the video is performed for the entire original video rather than for the sample scene video corresponding to the query result, which is for the play-back of the corresponding video from the corresponding position according to the query result.

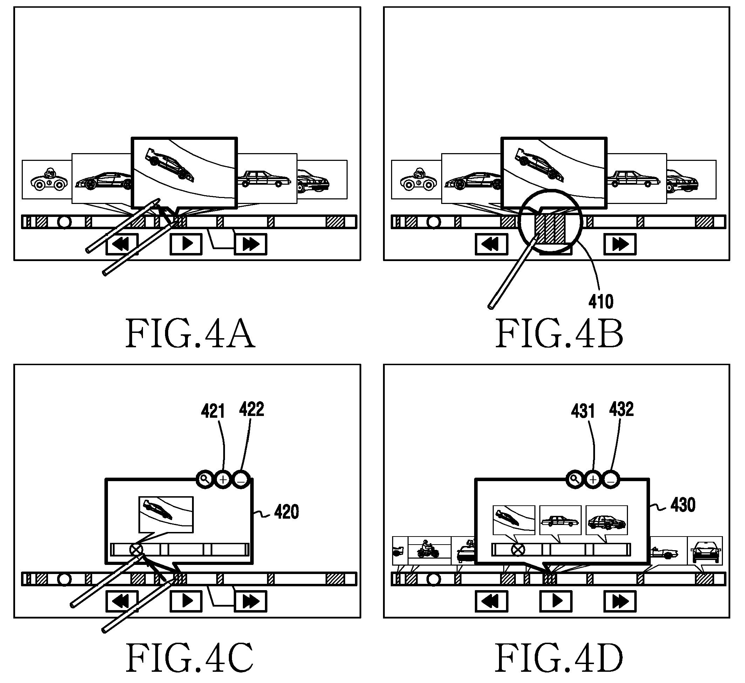

FIG. 4 illustrates a search method using a magnifying glass function in a video content search query result screen according to various embodiments of the present invention.

FIGs. 4 (a) to 4(d) illustrate a user interface for a scene marker searching method using a magnifying glass function. For example, when the scene markers corresponding to the query result are close to each other on the progress bar or the size of a marker width is too narrow or small to be selected, the magnifying glass function of enlarging and displaying a corresponding area may be used.

In a case of FIG. 4(a), when three of the scene markers corresponding to the query result are close to each other, if a hovering or touch is detected near an area where the scene markers are close to each other, one or more thumbnails or sample scene videos of markers close to the hovering or touch are displayed and the thumbnail or sample scene video of the scene marker closest to the hovering or touch is focused on. The focused information may have a larger size or shape compared to other adjacent information or have a different form, and thus may be spotlighted. In order to search for adjacent information, if the thumbnail or sample scene video is focused on and then the focusing is moved to another thumbnail or sample scene video, the corresponding screen may be provided in a highlighted form.

In another example, FIG. 4(b) illustrates a case where, when scene markers are close to each other by a predetermined reference or more as indicated by reference numeral 410, a magnifying glass function is provided to select the scene marker. When a hovering or touch is detected near the corresponding scene marker, the scene markers may be enlarged through a magnifying glass function including the corresponding scene marker. When a user input event such as a touch or hovering is detected in the expanded area, a corresponding thumbnail or sample scene video may be highlighted. According to various embodiments, the magnifying glass function may enlarge and display some areas on the progress bar if necessary regardless of whether scene markers are close to each other. That is, some enlarged areas on the progress bar may move following a user's pointing. In this case, movement of a position pointed to by a user input in the area inside the magnifying glass may be larger than movement in an area outside the magnifying glass in proportion to the magnification. For example, if movement of a pointing position by 10 pixels is required to select another marker continuous to one marker in the area outside the magnifying glass, movement by 20 pixels is required to select another corresponding marker within the 2x enlarged magnifying glass area.

FIGs. 4(c) and 4(d) illustrate a case 420 where only one thumbnail or sample scene video is shown and a case 430 where several thumbnails or sample scene videos are displayed as other examples of the magnifying glass function. Here, the size of displayed information may be controlled by adding enlargement and reduction functions 421, 422, 431, and 432 of the magnifying glass for enlarging and reducing one or more thumbnails or sample scene videos. In another example, in FIGs. 4(c) and 4(d), the thumbnail or sample scene video as well as the progress bar and the scene marker may be shown in the magnifying glass window. Further, through the enlargement and reduction functions of the magnifying glass, sizes of all elements within the window may be controlled or only the size of the thumbnail or sample scene video may be controlled. Accordingly, at least one element within the magnifying glass window may be enlarged/reduced. A sign on the scene marker within the magnifying glass window means that the corresponding scene marker is currently focused on.

When a pointing position is adjusted on the scene markers within the magnifying glass window, a user interface input position of a pointing, a touch, or the like may be determined in accordance with the scene marker area of the magnifying glass window rather than the original sized scene marker area. If the user input such as the hovering, the touch, or the like is processed in accordance with the scene markers in the original sized area rather than the area within the magnifying glass window, small movement causes an excessively large movement in the magnifying glass window, so that it may be difficult to accurately designate one desired scene marker among very small or close scene markers.

The magnifying glass function may be useful when a landscape mode is switched to a portrait mode in a smart phone, a tablet computer, or the like.

In another example, although not illustrated, when a plurality of thumbnails or sample scene videos are arranged within one magnifying glass window, the thumbnails or sample scene videos may be provided in a grid type arrangement. In another example, when a plurality of thumbnails or sample scene videos cannot be displayed within one magnifying glass window, the thumbnails or sample scene videos may be provided in a list form which can be scrolled or an image slide form.

In another embodiment, when the device is rotated, the rotation is detected by an accelerometer, a geomagnetic sensor, or the like, and a function of rotating a Graphical User Interface (GUI) screen based on the rotation is applied to a portable phone, a tablet computer, or the like. In this case, the number or shapes of pieces of information to be displayed may be properly determined according to the type of a landscape mode User Interface (UI) and a portrait mode UI.

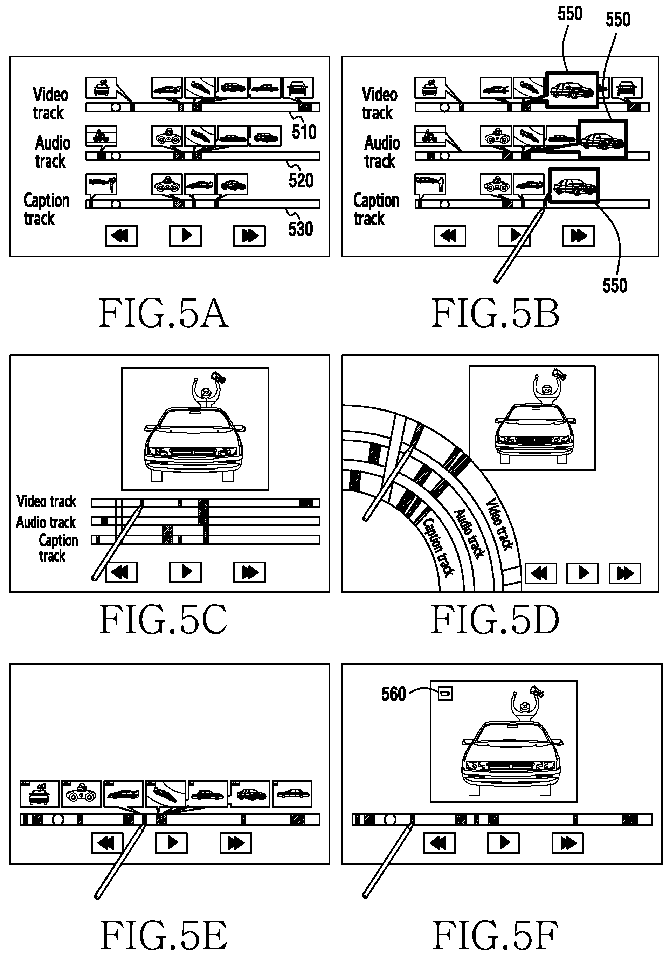

FIG. 5 illustrates a method of seeking a video content according to each track when the video content is searched for according to various embodiments of the present invention.

FIGs. 5(a) to 5(e) illustrate results of scene markers sought according to each track. That is, FIGs. 1 to 4 illustrate scene markers regardless of the track, but FIGs. 5(a) to 5(e) illustrate search results corresponding to the corresponding query according to each track by displaying one or more of a video track, an audio track, a caption track. Such a method is more easily used to recognize a situation. For example, when any place is used as a query, a query result may vary depending on the situation according to each track. That is, scenes that express the corresponding place as the image are searched for in the video track, mention of the corresponding place in conversion is searched for in the audio track, and a caption or text of the corresponding place is searched for in the caption track. Accordingly, the type of the corresponding scene may vary depending one each case, and there is an advantage of an easy search due to the consideration of such a complex situation.

FIG. 5(a) illustrates an example of a thumbnail or a sample scene video corresponding to a query result according to each track (for example, a video track 510, an audio track 520, and a caption track 530). At this time, it may be identified whether the thumbnail or sample scene video selected in the corresponding track 530 exists according to each track in other tracks (for example, the video track and the audio track) by enlarging and emphasizing corresponding information.

For example, as illustrated in FIG. 5(b), when a corresponding scene marker 550 is selected in the caption track 530, corresponding information on a thumbnail or sample scene video corresponding to the corresponding scene marker 550 may be also displayed in the audio track 520 and the video track 510 while being enlarged and emphasized.

In FIG. 5(c), scene markers are displayed according to each track, but the thumbnail or sample scene video is not displayed according to each track and is displayed on only one large screen.

In FIG. 5(d), scene markers are displayed according to each track, but the thumbnail or sample scene video is not displayed according to each track and is displayed on only one large screen, basically similar to FIG. 5(c). The progress bar of FIG. 5(d) may have a curved form. The curved form is to allow a user to use a service through only one hand alone when the user grasps the electronic device, such as a tablet computer or the like, with both hands. That is, when the user grasps a portable terminal with one hand or both hands, the user generally grasps the left side and the right side of the device. At this time, the thumb is laid on a display or a bezel (a frame from an edge of a smart phone to a start part of a display) and the remaining fingers are located on the rear surface of the portable electronic device. Accordingly, in order to control the user interface with only the thumb, the user interface may be conveniently used by the left thumb if the user interface is located on the lower left part as illustrated in FIG. 5(d). For this reason, the tracks may be located on the lower left part, lower right part, and lower center part, or may be located on one part, which is not divided according to the tracks, in the way illustrated in FIG. 4. According to another embodiment, when a transparent display having a rear touch screen is used, the control may be made through a pointing input from the rear surface of the display. In this case, the tracks may be arranged to use four fingers located on the rear surface of the display.

Since play-back positions of the current original video are the same on the progress bars of respective tracks in FIGs. 5(c) and 5(d), the play-back positions may be displayed with one vertical bar over the progress bars. Of course, in addition to the above form, various modifications can be made.

FIGs. 5(e) and 5(f) illustrate an example of displaying one or more icons of the track on the screen of the thumbnail or sample scene video instead of displaying the thumbnail or sample scene video according to each track. Since the icon is in from the video track, a video icon 560 may be displayed together.

The user interfaces are not applied to only the above embodiments, but various embodiments may be provided through a combination of one or more of the various techniques mentioned up to now.

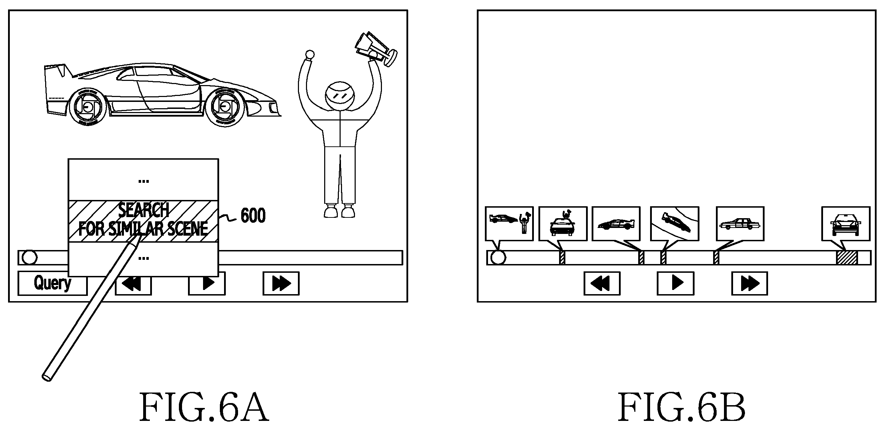

FIG. 6 illustrates a query interface screen for searching for a video content according to various embodiments of the present invention.

FIGs. 6(a) and 6(b) illustrate an example of an interface for querying a scene similar to one scene of video contents and searching for a result of the query. FIG. 6(a) illustrates an example of pausing a screen and making a query through a menu 600 during the play-back of the video. Through the query, a frame, shot, or scene, which is the most similar to an image of the current screen, may be searched for, and results of the query may be provided as illustrated in FIG. 6(b). That is, the image is composed of a red car and a person who wears red clothes and a helmet and raises a trophy, and a scene description for the query may be extracted through image analysis. As a result, the car, the person who raises his/her hand, the color red, and the like may be searched for in the corresponding video, and a frame, shot, or scene having one or more factors that match the query may be detected and provided as a result of the query. According to this embodiment, the query is made through the menu, but the query may be input through a button, text input, icon, and the like.

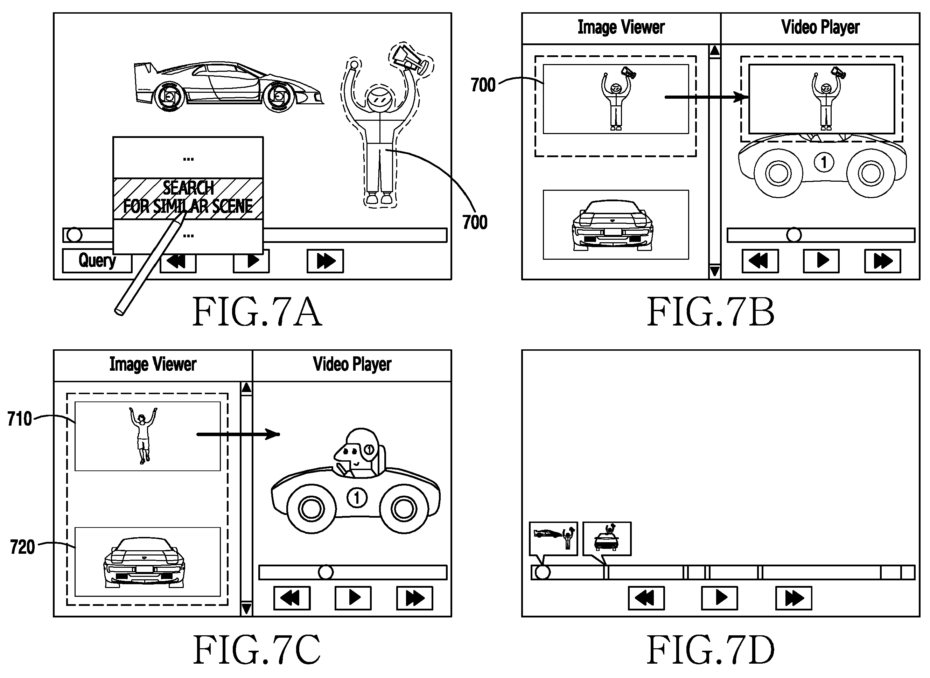

FIGs. 7(a) to 7(c) illustrate interface screens for a query method based on image recognition according to various embodiments of the present invention.

In FIG. 7(a), a particular part, for example, a man shaped part 700 is selected from a still image corresponding to a paused screen during the production of the video and then a query related to the shape part 700 may be made. At this time, for the selection, the surroundings of the person may be successively detected through an input interface device such as a pen or a touch screen. According to another embodiment, when a part of the man shaped area is pointed to through a double tab, a double click, a long press, or a long hovering, the shape part connected to the area may be automatically expanded and selected based on typical image processing technique. Such a technique is useful when information on objects included in the screen is stored in an object form. When data processing is not performed in advance in such a structure, techniques such as a method of extracting a boundary based on image recognition, a method of extracting a color area based on a color, and the like may be used. The image processing is a technique widely used in, particularly, face recognition, silhouette recognition, and the like, and a differential algorithm of extracting motion information from previous and next frames may be used.

FIGs. 7(b) and 7(c) illustrate a query method by a multi view. In a smart phone, a tablet computer, or the like, two or more windows, applications, frames, or contents are displayed on divided screens, which are usually referred to as a multi view. In addition, a desktop computer or a notebook supports a general multi window like overlappingly floating several windows. In such a multi view or multiple windows based on graphic user interface, a particular frame, shot, or scene on video contents can be detected using an image.

FIG. 7(b) illustrates an example of a drag or a pick&drop of one image 700, which is selected in an image viewer, to a video player, and FIG. 7(c) illustrates an example of dragging of two images 710 and 720 to the video play from the image viewer.

When the image searched for in the image viewer is dragged to the video player and thus a query is made as illustrated in FIG. 7(b) or 7(c), a query result may appear as illustrated in FIG. 7(d). As a method of using image information shown in another view for the query, the following user interface (for example, image information dragging or image information capture) may be considered.

The image information may refer to an image, which is currently searched for, an image file, or a thumbnail of the image file, and the image information dragging may refer to dragging the image information from a first view or window in which the image information exists, to a second view or window in which a video to be searched for is played.

For the image information dragging, the image information can be selected in an object form. When a command is made to perform the query by dragging the selected image information, the corresponding image information may be analyzed to extract description information to be queried, and then a query for a video to be searched for may be made.

Meanwhile, when a function of selecting or dragging the corresponding image information in the view in which the image information exists is not supported, the corresponding image information may be captured and dragged or copied and pasted. Recently, the smart phone may select and capture an entire screen or a desired part through a user's touch, dragging, sweep, button input, and the like on the currently searched screen. Accordingly, if the captured image is stored in the memory, the image may be pasted on the video screen. Further, an area to be captured may be designated and then the captured image may be displayed on the screen. The image may be dragged and pasted on the video screen. For example, when an image area to be used for a query is designated through a pen, the corresponding area may be captured. When the captured area is dragged and the dragging ends in another window in which the video exists, the query may be made based on the corresponding video.

FIG. 7(c) illustrates an example of executing the query by dragging two or more images. At this time, various query descriptions may be used such as executing the query by designating a plurality of images at once or executing one query and then further executing another query after a result comes out.

When the number of pieces of query image information is plural, a search result varies depending on how to use each piece of image information. For example, an "AND" operation, which reduces a range of the existing query result, may be performed or, inversely, an "OR" operation, which increases the query result, may be performed whenever image information is added. Accordingly, a user interface that further includes an operation relation when the image information is added may be provided. When such an interface is not used, "AND" or "OR" may be designated as default operators in a query system or set and applied as preference information by a user input.

FIG. 7(d) illustrates query results, and the number of query results is smaller than the number of query results of FIG. 6(b). This is because the image information of the person who raises his/her hand was designated in the query of FIGs. 7 (a) to 7(c) and thus the query results are limited to the person who raises his/her hand.

In another embodiment, a camera is operated during video play-back and an image is photographed by the camera. The query may be executed using the photographed image. At this time, the camera photographing may be performed in a separated window through a multi-view. When the user photographs an image by executing a camera application in a video player and then the photographing ends, the video player automatically returns to a video play-back application and then executes the query automatically with reference to the photographed image during a query process.

In another embodiment, through driving of a video player or an application associated with the video player, an image such as a sketch drawn by the user may be received, and the search may be performed based on the received image. For example, when a caricature of a person is drawn, a face of a person similar to the person may be searched for. Similarly, when a landscape, a building shape, a sign, a symbol, or the like is drawn and input, the query may be executed through the input. For example, when a beach landscape with a house is drawn, the beach and the house may be searched for in the video track, a sound of waves and a sound of seagulls may be searched for in the audio track, and text such as a sea, shore, seaport, port, and the like may be searched for in the text/caption track in order to search for a video content.

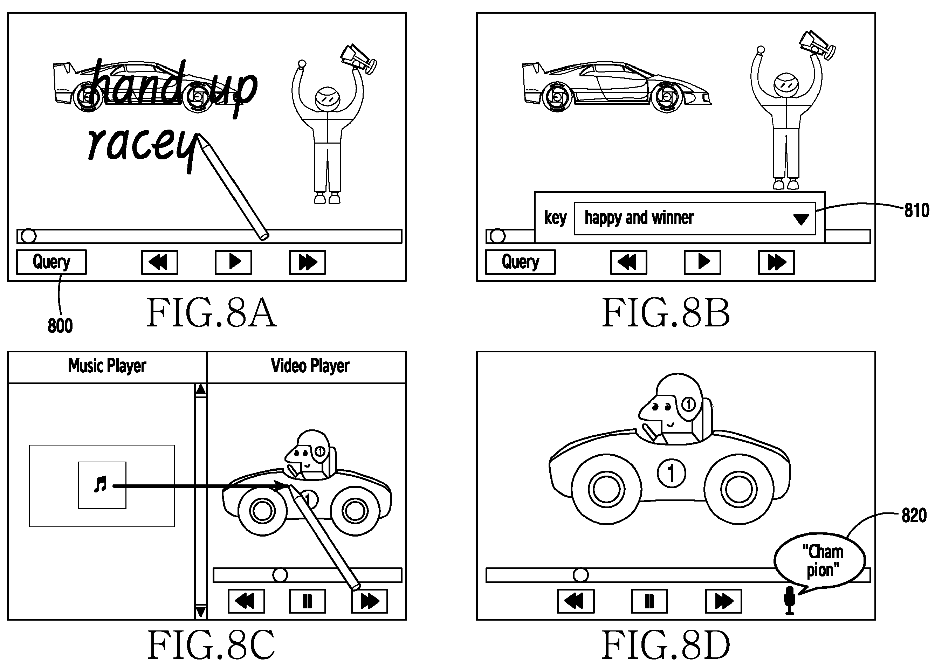

FIG. 8 illustrates various query interface screens for searching a video content according to various embodiments of the present invention. For example, FIGs. 8(a) to 8(d) illustrate examples of query methods by character input, character recognition, voice recognition, and music contents.

FIG. 8(a) illustrates an example of executing a query by inputting a character in a screen of a current video play-back application. The electronic device may first enter a query mode by using a query interface such as a button, a menu, or the like and waits until a writing input completely ends in the query mode. When there is no input within a predetermined time, the query may be executed. In contrast, after the writing input, the query may be executed by driving a query interface 800 by the writing input.

FIG. 8(b) illustrates an example of an interface for inputting a character such as a general keyword, sentence, or the like by using a keypad, a keyboard, or a virtual keyboard 810 and starting the query.

FIG. 8(c) illustrates a method of starting the query by using music contents, but other various methods can be used. For example, as illustrated in FIG. 7(a), a method of capturing an album image and recognizing letters within the captured image may be used. As another method, when a corresponding music file is dragged to a video player, the query may be executed using metadata such as a file name or ID3tag (tag information generally used to add information on a track title, an artist, and a music channel to the MP3 file). As another method, recording is performed through a query interface while the music is played and the search may be performed using lyrics, melodies, and music itself based on the recorded file. In a method of recording and recognizing music, the corresponding device transmits recorded contents to a separate remote server and then the server finds a similar music file by using an audio pattern of the music or a lyric recognition scheme and analyzes metadata from the music file. Accordingly, a query keyword and a search word may be easily extracted from information on a related composer, source, singer, lyrics, and the like.

Lastly, FIG. 8(d) illustrates a method of operating a voice recognition function while a video is played and recognizing the voice. The content of the voice may be processed through a natural language analysis scheme and humming, songs, or the like may be recognized to execute the query for the search as a voice recognition scheme.

For example, when a voice signal of "Champion" 820 is input through a microphone, a query word of "Champion" may be extracted using a well-known voice recognition algorithm.

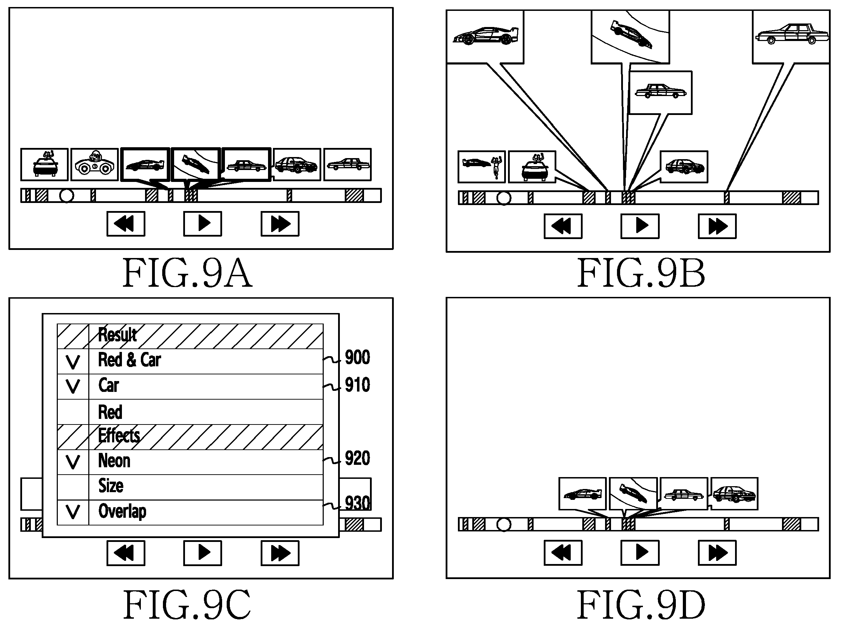

FIGs. 9(a) to 9(d) illustrate screens for searching for a query result according to other various embodiments of the present invention.

A thumbnail or sample scene video corresponding to the query result may be displayed according to a priority or may not be shown. Further, the results may be overlappingly displayed according to priories such that thumbnails or sample scene videos having high priorities are arranged on the upper part to be highlighted and the remaining thumbnails or sample scene videos having low priorities are sequentially arranged below according to the priorities thereof. In addition, with respect to query results corresponding to groups having the high priority or the other groups, the size, arrangement order, sequence of the arranged row and column, graphical effect, sound effect, and the like may be differently suggested.

The query results illustrated in FIG. 9(a) indicate scenes including a car or a large amount of red based on a query result of the car and the red color. At this time, thumbnails or sample scene videos corresponding to the two keywords are highlighted by providing a neon effect near the thumbnails or sample scene videos. Among the thumbnails or sample scene videos, query results with a color close to red have a deeper or brighter color effect and other query results have a less deep or less bright color effect.

FIG. 9(b) illustrates an example in which, as a query matching degree is higher, a larger thumbnail and sample scene video is displayed on an upper side of the screen. As the query matching degree is lower, the thumbnail or sample scene video is displayed on a lower side of the screen. On the contrary, the thumbnails and sample scene videos may be located on the lower side of the screen as the query matching degrees of thumbnails and sample scene videos are higher, and may be located on the upper side of the screen as the query matching degrees of thumbnails and sample scene videos are lower.

FIG. 9(c) illustrates desired conditions among the query results, for example, filtering of the query results or selection of a display effect. In FIG. 9(c), a query result 900 that meets both the red and the car and a query result 910 that meets only the car are displayed. Further, a neon effect 920 according to each priority may be assigned to the query result according to the matching degree, and an overlap effect 930 may be selected such that the result having a higher priority is overlappingly put on images having lower priorities. FIG. 9(d) illustrates query results according to the filtering condition set in FIG. 9(c).

As described above, it is possible to increase the user convenience by setting at least one of the effects such as the position, size, and overlap of the thumbnail and sample scene video corresponding to the query result according to the query matching degree and providing a function of selectively showing the query result according to a desired query content. Further, when the number of query results is large, it is possible to effectively limit the query results to categorize the query results, minimize the overlap therebetween, and make an important result more easily conspicuous to the user's eyes.

When focusing, a hovering, an input, or the like is performed on the query result arranged as described above, attributes such as a sound volume, a full view screen size, and the like may be differently suggested according to the corresponding priority.

A method of indexing an image and generating a sample scene video

There are very various algorithms for indexing an image or a video. In general, data that meets user requirements may be found in an image or a video based on information on a color, texture, shape, position between objects, and the like. In this case, image processing, pattern recognition, object separation, and the like are used and, particularly, may be used to detect a shot boundary by a comparison between before and after images.

Since the shot consists of images between recording and end of the camera, the images are generally similar to each other. Even though a change is generated, images included in the same shot may have a few changes which are sequential and smaller than a predetermined reference. Accordingly, various services can be performed by separating shots by using the image processing, pattern recognition, object separation, and the like, finding representative images, that is, key frame images from each shot, and analyzing the key frames.

For example, if the key frames are analyzed and similar shots are found and clustered, consecutive shots may constitute one scene (that is, sample scene video) and separated shots may be determined and described as shots having similar contents. Accordingly, where there is an image input for the query, a first shot similar to the input image is found, and then shots having descriptors similar to a descriptor of the first shot are found from the remaining shots and provided together as the query results. Finding the shot boundary to separate the shots is referred to as indexing or segmentation, and the content is extracted from a group formed as described above.

A part of the shot boundary includes a radical change generally expressed as a cut and a gradual change expressed as dissolve, through which the shot detection may be performed. The detection of scene switching may be performed based on a screen characteristic on a brightness histogram, an edge detection scheme, and calculation of an image change between sequential images. For example, in a compressed video such as MPEG, a shot boundary may be detected using a Discrete Cosine Transform (DCT) constant, a motion vector, or the like. In a case of a P frame, if an intra coding is larger than an inter coding, it is determined that there is a large change, the P frame may be considered as the shot boundary.

Particularly, in the shot, an I-frame image may be often used as a key frame. The I-frame, which is one independent image, is used for the scene switching or the beginning of a new shot. Accordingly, it may be convenient to identify a scene change by sequentially comparing frames changed based on I-frame images.

Basically, the shot boundary detection, indexing, clustering, and the like are based on the image but may also use audio information encoded with a video file. For example, in audio data, a sound louder than a threshold may be generated or a new speaker's voice may be detected. In this case, both a speaker-dependent recognition method and a speaker-independent recognition method may be used through voice recognition, and situation information on the corresponding scene or shot may be described by determining a person through the speaker-dependent recognition method and converting a voice into text through the speaker-independent recognition method and then analyzing the text.

A method of using the caption track may use text which corresponds to caption information. For example, when scene switching is implied through displaying of a particular time or place on the caption, the time or place may be used to detect the shot boundary and describe the situation. Further, the corresponding shot or scene may be described by analyzing a conversation between characters and generating various pieces of situation information from the conversation.

When the shot and scene are indexed, each of key frames is extracted from the indexed shot and scene to provide various services. Particularly, by extracting situation information on the key frames rather than all frames, an operation amount may be reduced. In general, the key frame separates the screen by using a color, a boundary (or edge), brightness information, and the like and extracts feature points from each of the separated objects, thereby finding main characteristics of the corresponding key frame together with color information and the like. For example, when there is a person, since a face area may be extracted and a person image may be found from the key frame through recognition of human body silhouette, the image may become a database. In another example, emotion information may be extracted and searched for by applying an algorithm of extracting characteristics, such as an average color histogram, average brightness, an average edge histogram, an average shot time, a gradual shot change rate, and the like, from several key frames within the scene and using the extracted characteristic as chromosome information.

In addition, by extracting objects from the image of the key frame and extracting a voice through voice recognition and text information on the caption, situation information indicating information such as a place, time, object, emotion, and the like is linked to the extracted information as description information indicating the characteristic in every shot or scene and stored in the database.

There are very various related arts in connection with this, and a detailed description thereof will be omitted and see the following documents for reference.

J. Yuan, H. Wang, L. Xiao, W. Zheng, J. Li, F. Lin and B. Zhang, "A Formal Study of Shot Boundary Detection," IEEE Transactions on Circuits and Systems for Video Technology, vol.17, no.2, pp.168-186, 2007.

J. Ren, J. Jiang and J. Chen, "Shot Boundary Detection in MPEG Videos Using Local and Global Indicators," IEEE Transactions on Circuits and Systems for Video Technology, vol.19, no.8, pp.1234-1238, 2009.

Z. Liu, D. Gibbon, E. Zavesky, B. Shahraray and P. Haffner, "A Fast, Comprehensive Shot Boundary Determination System," IEEE International Conference on Multimedia and Expo 2007, pp.1487-1490, Jul. 2007.

Y. Lin, B. Yen, C. Chang, H. Yang and G.C. Lee, "Indexing and Teaching Focus Mining of Lecture Videos," 11th IEEE International Symposium on Multimedia, pp.681-686, Dec. 2009.

T.E.Kim, S.K.Lim, M.H.Kim, "A Method for Lecture Video Browsing by Extracting Presentation Slides," Proc. of the KIISE Korea Computing Congress 2011, vol.38, no.1(C), pp.119-122, 2011. (in Korean)
H.-W Youu and S.-B. Cho, Video scene retrieval with interactive genetic algorithm
Multimedia Tools and Applications, Volume 34, Number 3, September 2007, pp. 317-336(20)
Meanwhile, the method of extracting the desired situation information by processing the text, video, image, and audio information for the query may be similar to a method of extracting, recording, and storing, in advance, corresponding situation information in every shot or scene in video contents to be searched for.

When a video file is analyzed, primary keywords may be extracted by analyzing an image, a sound, and text information of the video, audio, and caption tracks. For example, the keyword may be, representatively, an accurate word such as a name of a character, a place, a building, a time, lyrics, a track title, a composer, a car model, and the like. Further, situation information may be secondarily extracted by processing keywords. A query result reflecting a user's intention can be drawn by semantically identifying main keywords through natural language processing and determining a relationship between the keywords. For example, a relationship between characters and situation information such as mutual emotion may be extracted through conversation. When an image, a video, or music is input instead of the keyword, it is difficult to process the image, video, or music as the keyword. Accordingly, when the image, video, or music is input, situation information may be determined through image analysis, sound pattern recognition, or the like. For example, a gunfight is determined through gunfire, a fighting situation is determined through motions of people, an emotion is expressed through a facial expression, a natural environment is recognized through a landscape, emotions such as fright, fear, or the like are expressed through a scream, and information on corresponding music is extracted through recognition of music performance or humming.

The situation information extracted according to such a method may be described in connection with the shots and scenes based on the standard such as MPEG-7 and stored in the database. When the query is executed, a video shot of the corresponding query result and position information on the corresponding video track, audio track, and caption track may be provided using the stored situation information.

When the query is input, situation information corresponding to the target to be actually searched for, which reflects the user's intention, may be extracted and queried in various ways. For example, a method based on a keyword corresponds to a method of extracting a keyword input through character recognition, a keyboard, a virtual keyboard, voice recognition, sound recognition, and the like or main keywords in the sentence from the query, querying a descriptor that describes a situation of the shot or scene, and recommending corresponding candidates in the related database of a video file. Of course, in addition to the primary keyword, the secondary situation information may be automatically extracted to execute the query in the same way. Further, when the query is executed by receiving an image, a video, or sound information through a user interface device (microphone or a touch input device) by using a means such as capture, sketch, recording, touch, dragging, or the like, the situation information such as the emotion, natural environment, motion, music information, and the like may be extracted and used for the query like the video file analysis method.

The query result may be provided in the form of one of the image and the video. When the image is provided, a thumbnail image smaller than an actual image may be generated and provided. To this end, reducing and generating one or more key frames in the corresponding shot or scene is advantageous in terms of a processing speed or costs since a separate decoding is not needed. The sample scene video may be generated by extracting frame images at regular intervals or the predetermined number of frame images from the corresponding shot or scene, and may be generated as a video by reducing sizes of original frames or collecting partial images in the same coordinate area, like the thumbnail. When the sample scene video is generated according to a predetermined interval, a duration of the generated sample scene video may vary depending on a duration of the shot or scene. A sample scene video file may be made in a successive view type of still images such as an animation Graphic Interchange Format (GIF) or in a video compression file type such as an MPEG format.

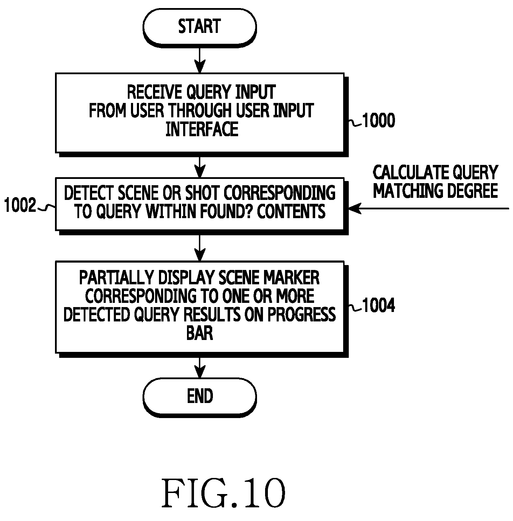

FIG. 10 is a flowchart illustrating a process of displaying a query result in an electronic device according to various other embodiments of the present invention.

Referring to FIG. 10, the electronic device receives a query input from the user through an input interface in operation 1000. For example, as illustrated in FIGs. 6 and 7, the paused video image may be used as a query image or an image captured from the corresponding image (for example, a still image of the contents or an image of another area) may be used as the query image. According to another embodiment, as illustrated in FIG. 8(a) or 8(b), a character input through the key or virtual keypad may be used as the query word. According to another embodiment, as illustrated in FIG. 8(c), metadata extracted by analyzing an image or recorded sound corresponding to metadata of the corresponding MP3 file may be used for the query input. According to another embodiment, as illustrated in FIG. 8(d), the query word may be extracted through voice recognition.

The electronic device detects the content (that is, scene or shot) corresponding to the query from the found contents according to a particular event in operation 1002. For example, when at least one set query image is dragged to a video play-back area or a character is input through voice recognition or a virtual keypad and then a predetermined time passes or a button for executing the query is selected in operation 1000, operation 1002 may be performed. At this time, when the content (that is, scene or shot) corresponding to the query within the contents is detected, a matching degree between the query input and the query result may be further calculated.

The electronic device may at least partially display one or more scene markers corresponding to one or more detected query results on the progress bar in operation 1004. For example, as illustrated in FIGs. 1(b) to 1(d), detected results corresponding to a plurality of queries may be displayed on the progress bar as scene markers, or an image or sample scene video corresponding to the corresponding scene marker may be displayed based on a paused position.

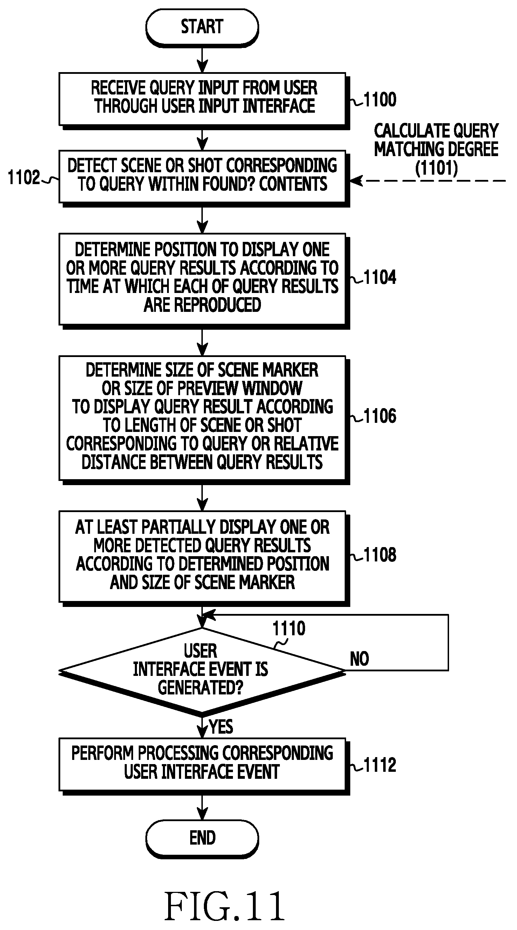

FIG. 11 is a flowchart illustrating a process of displaying a query result in an electronic device according to various other embodiments of the present invention.

Referring to FIG. 11, the electronic device receives a query input from the user through an input interface in operation 1100. For example, as illustrated in FIGs. 6 and 7, the paused video image may be used as a query image or an image captured from the corresponding image (for example, a still image of the contents or an image of another area) may be used as the query image. According to another embodiment, as illustrated in FIG. 8(a) or 8(b), a character input through the key or virtual keypad may be used as the query word. According to another embodiment, as illustrated in FIG. 8(c), metadata extracted by analyzing an image or recorded sound corresponding to metadata of the corresponding MP3 file may be used as the query. According to another embodiment, as illustrated in FIG. 8(d), the query word may be extracted through voice recognition.

The electronic device detects the content (that is, scene or shot) corresponding to the query from the found contents according to a particular event in operation 1102. For example, when at least one set query image is dragged to a video play-back area or a character is input through voice recognition or a virtual keypad and then a predetermined time passes or a button for executing the query is selected in operation 1000, operation 1102 may be performed. At this time, when the content (that is, scene or shot) corresponding to the query within the contents is detected, a matching degree between the query input and the query result may be further calculated in operation 1101.

The electronic device determines a position to display at least one query result according to a time at which each query result is played (or play-back section) in operation 1104, and determines a duration of the scene or shot of the contents corresponding to the query result, a size of the scene marker to display the query result, or a size of a preview window in operation 1106.

In operation 1108, the electronic device may at least partially display one or more detected query results according to the determined position, the determined size of the scene marker, and the determined size of the preview window. That is, the one or more query results are at least partially displayed together with one or more progress bars, and one or more of the scene marker, image, and sample scene video corresponding to the query result may be displayed on the progress bars, at boundaries, or in one or more adjacent areas. According to another embodiment, with respect to the scene marker, at least one graphic attribute of a figure, character, symbol, relative size, length, color, shape, angle, and animation effect may be determined and differently displayed according to a length of a content of the contents corresponding to the query result or a matching degree of the query. According to another embodiment, when it is difficult to display the scene marker on the progress bar due to the size or length, the electronic device may generate and display consecutive scene markers as one scene marker. According to another embodiment, assigning the magnifying glass function to the progress bar may make selection of and search for the scene marker easy.

The electronic device may generate one or more images or sample scene videos corresponding to the one or more query results and further display the generated images or sample scene videos at least partially on the preview window. Further, the electronic device may set a priority of the image or sample scene video corresponding to the query result according to a length of a shot and a scene, a matching degree of the query, or a distance between a position of play-back /pause of contents and the scene marker corresponding to the query result, and determine and differently display at least one of a size of a window to display the image or sample scene video, a position, overlap, whether to display the image or sample scene video, animation, and graphic attribute.

According to another embodiment, as illustrated in FIG. 5, the query results may be separately displayed according to each of the video track, the audio track, and the caption track.

When a user interface input event is detected in operation 1110, the electronic device may perform processing corresponding to the user interface input event in operation 1112.

For example, as illustrated in FIG. 2(a) or 2(b), when scene markers corresponding to the query results are partially displayed on the progress bar, if the scene marker to be searched for is pointed to (for example, touched or hovered), an image or sample scene video corresponding to the pointed scene marker may be displayed.

In another example, when scene markers corresponding to the query results and scenes, shots, or key frames of contents are linked and simultaneously displayed as illustrated in FIG. 2(c) or 2(d), if the scene marker to be searched for is pointed to (for example, touched or hovered), an image or sample scene video corresponding to the pointed scene marker may be displayed to be highlighted.

In another example, when the hovering is maintained for a long time while the corresponding scene marker is pointed to or when a thumbnail or sample scene video corresponding to the corresponding scene marker is touched (or hovered), an enlarged thumbnail or sample scene video may be displayed on the screen.

In another example, when scene markers corresponding to the query results are close to each other as illustrated in FIGs. 4(b) to 4(d), if a hovering or touch is detected near the scene marker close to other scene markers, an area including the corresponding scene marker may be enlarged and displayed.

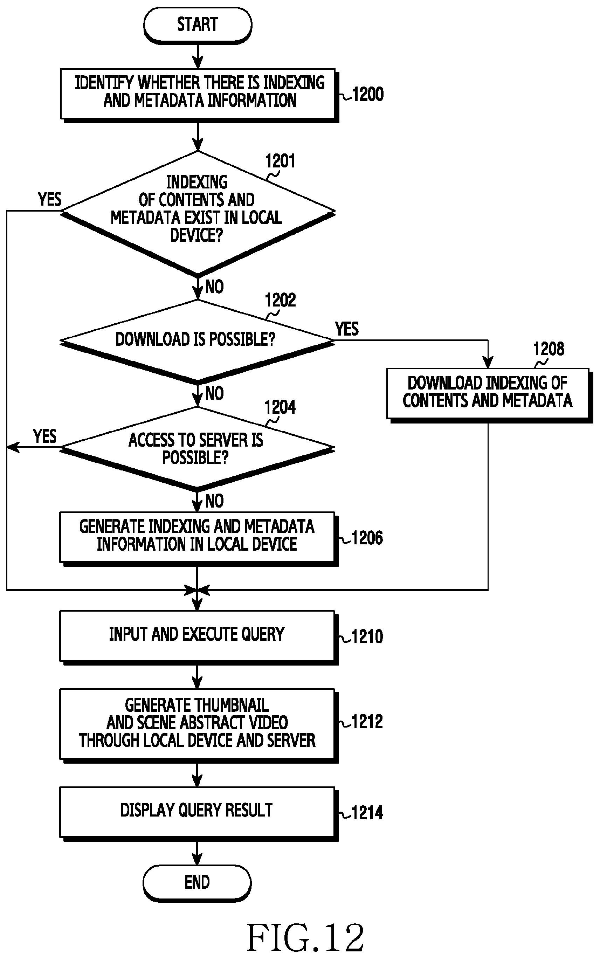

Meanwhile, according to the development of technologies of a wireless network and high speed communication, a real time streaming service is often used. Like a case of contents in a local device, it may be required to query and search for a desired content while the real time streaming service is used. When a part including a desired scene has not been yet downloaded or the seeking is required, the service may not be supported. Accordingly, in order to solve the problem, a method of a content-based search of multimedia stream contents may be implemented in FIG. 12.

FIG. 12 is a flowchart illustrating a process of displaying a query result in an electronic device according to various other embodiments of the present invention.

Referring to FIG. 12, the electronic device identifies whether there are indexing information and metadata information on multimedia stream contents (hereinafter, indexing and metadata information are collectively referred to as a description) in operation 1200. Operation 1200 corresponds to an operation for identifying whether there is a database generated by extracting only indexing information and metadata on a shot or scene of a video such as an MPEG-7 document, particularly, a summary Description Scheme (DS).

The electronic device proceeds to operation 1210 when there are the indexing information and the metadata information on the multimedia stream contents in operation 1201, and proceeds to operation 1202 when there are no indexing information on the multimedia stream contents and metadata information.

The electronic device determines whether the index and metadata information on the multimedia stream contents can be downloaded together with multimedia streams in operation 1202. When the download is not possible, the electronic device determines whether the electronic device can access an associated server or remote device. The electronic device proceeds to operation 1210 when the access is possible, and proceeds to operation 1206 when the access is not possible.

Meanwhile, when the download is possible, the electronic device proceeds to step 1208 and downloads the index information and metadata on the contents.

For example, before a multimedia content streaming service, the electronic device downloads the corresponding indexing and metadata information or provides a means for the access to a network having corresponding resources. When both a local device and a server do not have the corresponding index and metadata information, the electronic device may generate the index and metadata information by using shot information such as a key frame and the like in real time while downloading streaming contents to the electronic device in operation 1206. At this time, the index information (time, position, and the like) and related metadata may be made together with a thumbnail or a sample scene video or made only based on text.

Thereafter, the electronic device may input a query and execute the query in operation 1210. For example, the query may be input and executed while a streaming service is performed or after contents are completely downloaded. When the indexing and metadata information can be acquired through the local device or the server, the electronic device may calculate a matching degree between the input query and each piece of information by using the indexing and metadata information and, when the matching degree is larger than or equal to a predetermined value, extract metadata related to the corresponding indexing information.

Thereafter, the electronic device generates a thumbnail and a sample scene video corresponding to a query result in operation 1212. For example, when a partial content of the contents corresponding to the query result is pre-stored and the thumbnail or the sample scene video is generated or extracted using the pre-stored part of the contents, the electronic device generates the thumbnail and the sample scene video suitable for the query input based on the generated or extracted thumbnail or sample scene video. However, when the corresponding part of the contents among the query results has not been yet downloaded or cannot be generated by the local device, the electronic device accesses the server to make a request for downloading the partial content of the corresponding contents and, when the download of the contents is possible, generates and stores a corresponding thumbnail or sample scene video. If it is difficult to generate the sample scene video, the electronic device may generate only the thumbnail from stream data and store the generated thumbnail in the local device.

For example, when the streaming service has progress up to 13:00 at present but a query result corresponds to 16:00, the electronic device may make a request for downloading contents during a duration of the corresponding shot or scene from 16:00 to the server through a protocol such as RTP/RTPS/HTTPS and receive the contents.

The electronic device may be a device such as a portable terminal, a mobile terminal, a mobile pad, a media player, a tablet computer, a handheld computer, a Personal Digital Assistant (PDA), a server, a personal computer, or the like. Further, the electronic device may be a predetermined device including a device having a function generated by combining two or more functions of the above devices.

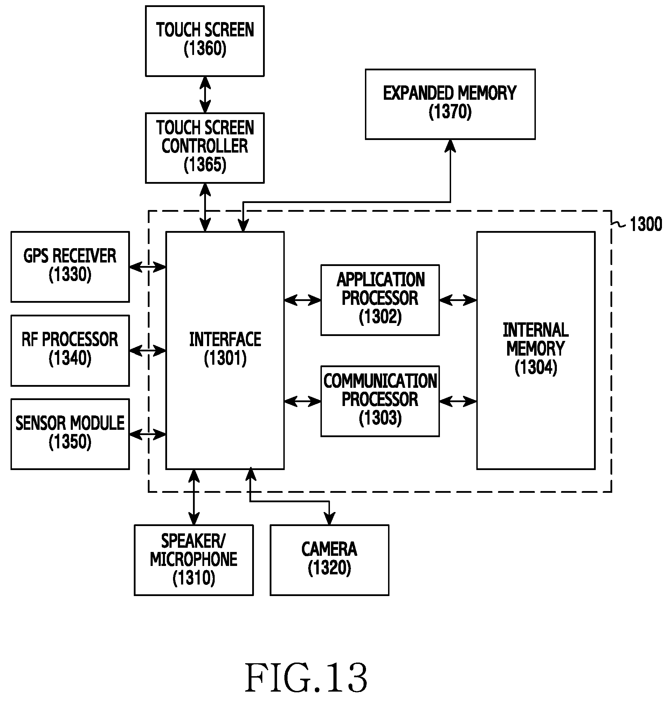

FIG. 13 illustrates a configuration of an electronic device according to an embodiment of the present invention.

Referring to FIG. 13, the electronic device includes a controller 1300, a speaker/microphone 1310, a camera 1320, a GPS receiver 1330, an RF processor 1340, a sensor module 1350, a touch screen 1360, a touch screen controller 1365, and an expanded memory 1370.

The controller 1300 may include an interface 1301, one or more processors 1302 and 1303, and an internal memory 1304. In some cases, an entirety of the controller 1300 may be called a processor. The interface 1301, the application processor 1302, the communication processor 1303, and the internal memory 1304 either may be separate elements or may be integrated into at least one integrated circuit.

The application processor 1302 performs various functions for the electronic device by executing various software programs, and the communication processor 1303 performs processing and control for voice communication and data communication. Further, in addition to the ordinary functions as described above, the processors 1302 and 303 may execute a particular software module (command set) stored in the expanded memory 1370 or the internal memory 1304, thereby performing various particular functions corresponding to the modules. That is, the processors 1302 and 1303 perform a method of inputting a query and displaying a result of the query according to the present invention by interworking with software modules stored in the expanded memory 1370 or the internal memory 1304.

For example, the application processor 1302 may input a query by using a user input interface, detect a content (that is, a scene or a shot) corresponding to the query from found contents according to a particular event, and partially display scene markers corresponding to one or more detected query results on a progress bar. For example, as illustrated in FIGs. 1(b) to 1(d), detected results corresponding to a plurality of queries may be displayed on the progress bar as scene markers, or an image or sample scene video corresponding to the corresponding scene marker may be displayed based on a paused position.

For example, in the query input, as illustrated in FIGs. 6 and 7, the paused video image may be used as a query image or an image captured from the corresponding image (for example, a still image of the contents or an image of another area) may be used as the query image. According to another embodiment, as illustrated in FIG. 8(a) or 8(b), a character input through the key or virtual keypad may be used as the query word. According to another embodiment, as illustrated in FIG. 8(c), metadata extracted by analyzing an image or recorded sound corresponding to metadata of the corresponding MP3 file may be used as the query. According to another embodiment, as illustrated in FIG. 8(d), the query word may be extracted through voice recognition.

Further, when at least one set query image is dragged to a video reproduction area or a character is input through voice recognition or a virtual keypad and then a predetermined time passes or a button for executing the query is selected, detection for a result of the query may be performed. Moreover, when the result of the query is detected, the application processor 1302 may further calculate a matching degree between the input of the query and the result of the query.

Furthermore, the application processor 1302 determines positions of one or more query results according to a time (or a reproduction section) reproduced for each of the query results, determines a duration of a scene or shot of contents corresponding to the query result, a size of a scene marker to display the query result, or a size of a preview window, and at least partially display the one or more detected query results according to each of the determined position, the determined size of the scene marker, and the determined size of the preview window. That is, the one or more query results are at least partially displayed together with one or more progress bars, and one or more of the scene marker, image, and sample scene video corresponding to the query result may be displayed on the progress bars, at boundaries, or in one or more adjacent areas. Further, with respect to the scene marker, at least one graphic attribute of a figure, character, symbol, relative size, length, color, shape, angle, and animation effect may be determined and differently displayed according to a length of a content of the contents corresponding to the query result or a matching degree of the query.

The application processor 1302 may generate one or more images or sample scene videos corresponding to the one or more query results and further display the generated images or sample scene videos at least partially on the preview window. Further, the application processor 1302 may set a priority of the image or sample scene video corresponding to the query result according to a duration of a shot and a scene, a matching degree of the query, or a distance between a position of reproduction/pausing of contents and the scene marker corresponding to the query result, and determine and differently display at least one of a size of a window to display the image or sample scene video, a position, overlapping, whether to display the image or sample scene video, animation, and graphic attribute.

According to another embodiment, as illustrated in FIG. 5, the query results may be separately displayed at each position of the video track, the audio track, and the caption track.

When a user interface input event is detected in operation 1110, the electronic device may perform processing corresponding to the user interface input event in operation 1112.

For example, when scene markers corresponding to the query results are partially displayed on the progress bar as illustrated in FIG. 2(a) or 2(b), if the scene marker to be searched for is pointed to (for example, touched or hovered), an image or sample scene video corresponding to the pointed scene marker may be displayed.

In another example, when scene markers corresponding to the query results and scenes, shots, or key frames of contents are linked and simultaneously displayed as illustrated in FIG. 2(c) or 2(d), if the scene marker to be searched for is pointed to (for example, touched or hovered), an image or sample scene video corresponding to the pointed scene marker may be displayed to be highlighted.

In another example, when the hovering is maintained for a long time while the corresponding scene marker is pointed to or when a thumbnail or sample scene video corresponding to the corresponding scene marker is touched (or hovered) as illustrated in FIG. 3(c), an enlarged thumbnail or sample scene video may be displayed on the screen.

In another example, when scene markers corresponding to the query results are close to each other as illustrated in FIGs. 4(a) to 4(d), if a hovering or touch is detected near the scene marker close to other scene markers, a partial area including the corresponding scene marker may be enlarged and displayed.

In another embodiment, the application processor 1302 downloads corresponding indexing and metadata information or provides a means for access to a network having corresponding resources before a multimedia content streaming service. When there are no corresponding indexing and metadata information in either a local device and a server, the application processor 1302 generates the indexing and metadata information in real time by using shot information on a key frame while downloading streaming contents to the electronic device, inputs and executes a query, and generates and displays a thumbnail and sample scene video corresponding to a result of the query.

In another embodiment, the processors 1302 and 1303 also serve to store the query result in the expanded memory 1370 or the internal memory 1304 by executing a particular software module (command set) stored in the expanded memory 1370 or the internal memory 1304. In another embodiment, the processors 1302 and 1303 also serve to display again the query result stored in the expanded memory 1370 or the internal memory 1304 by executing a particular software module (command set) stored in the expanded memory 1370 or the internal memory 1304. Accordingly, the result executed once may be stored and then displayed again and used when the user requires the result.

Meanwhile, another processor (not shown) may include one or more of a data processor, an image processor, or a codec. The data processor, the image processor, or the codec may be separately configured. Further, several processors for performing different functions may be configured. The interface 1301 is connected to the touch screen controller 1365 and the expanded memory 1370 of the electronic device.

The sensor module 1350 may be connected to the interface 1301 to enable various functions. For example, a motion sensor and an optical sensor are connected to the interface 1301 to detect a motion of the electronic device and sense a light from the outside. Moreover, other sensors, such as a positioning system, a temperature sensor, and a biological sensor, may be connected to the interface 1301 to perform related functions.

The camera 1310 may perform a camera function such as taking a picture and recording a video through the interface 1301.

The RF processor 1340 performs a communication function. For example, under the control of the communication processor 1303, the RF processor 1340 converts an RF signal into a baseband signal and provides the converted baseband signal to the communication processor 1303 or converts a baseband signal from the communication processor 1303 into an RF signal and transmits the converted RF signal. Here, the communication processor 1303 processes the baseband signal according to various communication schemes. For example, the communication schemes may include, but are not limited to, a Global System for Mobile Communication (GSM) communication scheme, an Enhanced Data GSM Environment (EDGE) communication scheme, a Code Division Multiple Access (CDMA) communication scheme, a W-Code Division Multiple Access (W-CDMA) communication scheme, a Long Term Evolution (LTE) communication scheme, an Orthogonal Frequency Division Multiple Access (OFDMA) communication scheme, a Wireless Fidelity (Wi-Fi) communication scheme, a WiMax communication scheme or/and a Bluetooth communication scheme.

The speaker/microphone 1310 may perform input and output of an audio stream, such as voice recognition, voice recording, digital recording, and phone call function. That is, the speaker/microphone 1310 converts a voice signal into an electric signal or converts an electric signal into a voice signal. Although not illustrated, an attachable and detachable ear phone, a head phone, or a head set may be connected to the electronic device through an external port.

The touch screen controller 1365 may be connected to the touch screen 1360. The touch screen 760 and the touch screen controller 1365 may detect, but are not limited to detecting, a contact, a movement, or an interruption thereof, using not only capacitive, resistive, infrared ray, and surface sound wave technologies for determining one or more contact points with the touch screen 1360 but also certain multi-touch detection technologies including other proximity sensor arrays or other elements.

The touch screen 1360 provides an input/output interface between the electronic device and a user. That is, the touch screen 1360 transfers a touch input of the user to the electronic device. Further, the touch screen 1360 is a medium that shows an output from the electronic device to the user. That is, the touch screen shows a visual output to the user. Such a visual output appears in the form of a text, a graphic, a video, or a combination thereof.

The touch screen 1360 may employ various displays. For example, the touch screen 1360 may use, but is not limited to using, a Liquid Crystal Display (LDC), a Light Emitting Diode (LED), a Light emitting Polymer Display (LPD), an Organic Light Emitting Diode (OLED), an Active Matrix Organic Light Emitting Diode (AMOLED), or a Flexible LED (FLED).

In addition to the embodiments of the present invention, the touch screen 1360 may support a hovering function which can control the query result, by sensing a position through a hand or a stylus pen without a direct contact or measuring a sensing time.

The GPS receiver 1330 converts a signal received from a satellite into information including position, speed, and time. For example, a distance between a satellite and the GPS receiver may be calculated by multiplying the speed of light by the time for the arrival of the signal, and the position of the electronic device may be obtained according to the known principle of triangulation by calculating the exact positions and distances of three satellites.

The internal memory 1304 may include one or more of a high speed random access memory and/or non-volatile memories, and one or more optical storage devices and/or flash memories (for example, NAND and NOR).

The expanded memory 1370 refers to external storage such as a memory card.

The expanded memory 1370 or the internal memory 1304 stores software. Software components include an operating system software module, a communication software module, a graphic software module, a user interface software module, and an MPEG module, a camera software module, and one or more application software modules. Further, since a module, which is the software component, may be expressed as a set of instructions, the module is also expressed as an instruction set. The module is also expressed as a program.

The operating system software includes various software components that control the general system operation. Controlling the general system operation refers to, for example, managing and controlling a memory, controlling and managing storage hardware (device), and controlling and managing power. Such operating system software also performs a function of smoothening communication between various hardware (devices) and software components (modules).

The communication software module enables communication with another electronic device, such as a computer, a server and/or a portable terminal, through the RF processor 1340. Further, the communication software module is configured in a protocol structure corresponding to the corresponding communication scheme.

The graphic software module includes various software components for providing and displaying graphics on the touch screen 1360. The term "graphics" is used to have a meaning including text, web page, icon, digital image, video, animation, and the like.

The user interface software module includes various software components related to the user interface. The user interface software module may include the content indicating how a state of the user interface is changed or indicating a condition under which the change in the state of the user interface is made.

The camera software module may include a camera-related software component which enables a camera-related process and functions. The application module includes a web browser including a rendering engine, email, instant message, word processing, keyboard emulation, address book, touch list, widget, Digital Right Management (DRM), voice recognition, voice copy, position determining function, location based service, and the like. Each of the memories 770 and 1504 may include an additional module (instructions) as well as the modules described above. Alternatively, some modules (instructions) may not be used as necessary.

In connection with the present invention, the application module includes instructions (see FIGs. 10 to 12) for inputting the query and displaying the query result according to the present invention.

Methods, according to various embodiments, disclosed in claims and/or the specification may be implemented in the form of hardware, software, or a combination thereof.

In the implementation of software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present invention as defined by the appended claims and/or disclosed herein.

The programs (software modules or software) may be stored in non-volatile memories including a random access memory and a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), or other type optical storage devices, or a magnetic cassette. Alternatively, any combination of some or all of the may form a memory in which the program is stored. Further, a plurality of such memories may be included in the electronic device.

The programs may be stored in an attachable storage device that is accessible through a communication network, such as the Internet, the Intranet, a Local Area Network (LAN), Wide LAN (WLAN), or Storage Area network (SAN), or a communication network configured with a combination thereof. The storage devices may be connected to an electronic device through an external port.

Further, a separate storage device on the communication network may access a portable electronic device.

A method of searching for contents by an electronic device includes: receiving an input of a query for searching for a content of the contents through a user interface; detecting, as a result of the query, at least one partial content of the contents corresponding to the query by using a description related to the contents; determining a position to display the result of the query; determining a size of a scene marker corresponding to the result of the query or a size of an area to display the result of the query in consideration of at least one of a length of the partial content of the contents and a relative distance between the results of the query; and at least partially displaying one or more results of the query according to the determined position and related size of the result of the query.

The at least partially displaying of the one or more results of the query includes at least partially displaying the one or more results of the query together with one or more progress bars, and displaying at least one of a scene marker, an image, and a sample scene video corresponding to the result of the query in at least one area of the progress bar, a boundary, and an adjacent area.

At least one graphic attribute of the scene marker, such as a figure, a character, a symbol, a relative size, a length, a color, a shape, an angle, or an animation effect, is determined and displayed according to a duration of the content of the contents corresponding to the result of the query or a matching degree of the query.

The detecting of, as the result of the query, the at least one partial content includes calculating a matching degree between the content of the query and the result of the query.

The method further includes generating one or more images or sample scene videos corresponding to one or more results of the query and at least partially displaying the generated images or sample scene videos on a screen.

The method further includes setting a priority of the image or sample scene video corresponding to the result of the query according to a duration of a shot and a scene, a matching degree of the query, a position of play-back/pausing of the contents, and a distance between scene markers corresponding to the results of the query; and determining at least one of a size of a window to display the image or sample scene video, a position, an overlap, whether to display the image or sample scene video, an animation, and a graphic attribute according to the priority.

The method further includes displaying the results of the query separately at each position of a video track, an audio track, and a caption track.

The method includes, when a distance between results of the query adjacent to each other is shorter than a predetermined reference, at least one of overlapping the results of the query and combining and displaying the results of the query into one.

The method further includes, when a distance between results of the query adjacent to each other is shorter than a predetermined reference, arranging the results of the query in consideration of a size of a display window such that some of the results of the query do not overlap each other at a predetermined rate or more.

The method further includes, when a distance between results of the query adjacent to each other is shorter than a predetermined reference, performing a magnifying glass function for enlarging a corresponding part when an input event is detected through a user interface.

The method further includes: selecting one of the one or more results of the query; and enlarging or reducing and displaying an image or sample scene video corresponding to the selected result of the query.

The method further includes play-back the contents from a position corresponding to the selected result of the query or performing a full view of the image or sample scene video corresponding to the selected result of the query.

In a case of the scene marker displayed on the progress bar as the result of the query, an image or sample scene video related to the corresponding scene marker is displayed if the corresponding scene marker is pointed to, or, in a case of the image or sample scene video displayed as the result of the query, a scene marker related to the corresponding image or sample scene video is displayed if the corresponding image or sample scene video is pointed to.

The method further includes, in a case of the image or sample scene video displayed as the result of the query, generating an input by a user interface and changing and displaying a size of the corresponding image or sample scene video according to an increase in a holding time of the input.

The method further includes, in a case of the sample scene video displayed as the result of the query, play-back the corresponding sample scene video if an input by a user interface is detected.

The method further includes, in a case of the sample scene video displayed as the result of the query, play-back the contents from a position of the corresponding sample scene video if an input by a user interface is detected.

The method further includes: play-back the contents, determining whether a current play-back position of the contents is associated with a query result; and when the play-back position of the contents is associated with the query result, executing one or more feedbacks among sound, haptic, and visual feedbacks based on scene marker attributes.

The method further includes assigning the scene marker attributes to a scene marker corresponding to the query result.

The method further includes, when the scene marker corresponding to the query result is pointed to, executing one or more feedbacks among sound, haptic, and visual feedbacks according to scene marker attributes.

A method of inputting a user query for a content-based query in contents includes: setting contents to be searched for through a user input interface; setting a query for searching for a content of the contents to be searched for; searching for a partial content of the contents corresponding to the query as a query result by using description information related to the contents to be searched for; and displaying one or more detected query results based on a query matching degree.

The setting of the query for searching for the content of the contents to be searched includes: setting a query image; and extracting one or more query contents by image-analyzing the query image.

The setting of the query image includes: pausing a video player, which is being played; and setting a screen of the paused video as the query image.

The setting of the query image includes: capturing an image; and linking the captured image with contents to be queried through the user input interface.

The capturing of the image includes setting an area including one or more images to be captured through the user input interface.

The capturing of the image includes setting an area of the image to at least partially capture one or more images in another area, which is not a position of the contents to be queried, through the user input interface.

The linking of the captured image with the contents to be queried includes moving the captured image on the contents to be queried.

The setting of the query for searching for the content of the contents to be searched includes inputting a character through a key or a virtual keypad.

The setting of the query for searching for the content of the contents to be searched includes: receiving a voice signal; extracting text corresponding to the voice signal; and setting the extracted text as a query word.

The setting of the query for searching for the content of the contents to be searched includes: recording a music sound; extracting one or more pieces of metadata including at least a music title by recognizing the recorded music sound; and setting a query word by using the extracted metadata including at least the music title.

The method includes: before the inputting of the query, identifying whether there is image indexing information on the contents to be searched for or metadata in a local device; when there is no image indexing information on the contents to be searched for or the metadata in the local device, identifying whether there is the image indexing information or the metadata in a server or a remote device related to the contents; when there is the image indexing information or the metadata in the server or the remote device related to the contents, downloading description information including one or more pieces of the image indexing information and the metadata; when there is no image indexing information on the contents to be searched for or metadata in the local device and when there is no image indexing information or metadata in the server or the remote device related to the contents, generating the description information including one or more pieces of the image indexing information on the contents to be searched for and the metadata.

An electronic device includes: one or more processors; a memory; and one or more programs stored in the memory and configured to be executed by the one or more processors. The program includes commands for inputting a query for searching for a content of contents by using a user interface, detecting at least one partial content of the contents corresponding to the query as a query result by using description information related to the contents, determining a position to display the query result, determining a size of a scene marker corresponding to the query result or a size of a window to display the query result in consideration of at least one of a length of the partial content of the contents and a relative distance between the query results, and at least partially displaying one or more query results according to the determined position of the query result and the determined related size.

The command for at least partially displaying of the one or more results of the query includes a command for displaying the one or more results of the query together with one or more progress bars, and displaying at least one of a scene marker, an image, and a sample scene video corresponding to the query result in at least one area of the progress bar, a boundary, and an adjacent area.

The at least one graphic attribute of the scene marker, such as a figure, a character, a symbol, a relative size, a length, a color, a shape, an angle, or an animation effect, is determined and displayed according to a duration of the content of the contents corresponding to the result of the query or a matching degree of the query.

The program further includes a command for calculating a matching degree between the content of the query and the result of the query.

The program further includes a command for generating one or more images or sample scene videos corresponding to one or more results of the query and at least partially displaying the generated images or sample scene videos on a screen.

The program further includes a command for setting a priority of the image or sample scene video corresponding to the result of the query according to a duration of each shot and scene, a matching degree of the query, a position of play-back/pausing of the contents, and a distance between scene markers corresponding to the results of the query; and determining at least one of a size of a window to display the image or sample scene video, a position, an overlap, whether to display the image or sample scene video, an animation, and a graphic attribute according to the priority.

The program further includes a command for displaying the results of the query separately at each position of a video track, an audio track, and a caption track.

When a distance between the query results adjacent to each other is shorter than a predetermined reference, the query results are overlappingly displayed.

The program further includes a command for, when a distance between the query results adjacent to each other is shorter than a predetermined reference, arranging the query results in consideration of a size of a display window such that some of the query results do not overlap each other at a predetermined rate or more.

The program further includes a command for, when a distance between the query results adjacent to each other is shorter than a predetermined reference, performing a magnifying glass function for enlarging a corresponding part when an input event is detected through a user interface.

The program further includes a command for selecting one of the one or more query results; and enlarging or reducing and displaying an image or sample scene video corresponding to the selected query results.

The program further includes a command for play-back the contents from a position corresponding to the selected result of the query or performing a full view of the image or sample scene video corresponding to the selected result of the query.

In a case of the scene marker displayed on the progress bar as the query result, an image or sample scene video related to the corresponding scene marker is displayed if the corresponding scene marker is pointed to, or, in a case of the image or sample scene video displayed as the query result, a scene marker related to the corresponding image or sample scene video is displayed if the corresponding image or sample scene video is pointed to.

The program further includes a command for, in a case of the image or sample scene video displayed as the query result, generating an input by a user interface and changing and displaying a size of the corresponding image or sample scene video according to an increase in a holding time of the input.

The program further includes a command for, in a case of the sample scene video displayed as the result of the query, play-back the corresponding sample scene video if an input by a user interface is detected.

The program further includes a command for, in a case of the sample scene video displayed as the query result, play-back the contents from a position of the corresponding sample scene video if an input by a user interface is detected.

The program further includes a command for play-back the contents, determining whether a current play-back position of the contents is associated with a query result; and when the reproduction position of the contents is associated with the query result, executing one or more feedbacks among sound, haptic, and visual feedbacks by scene marker attributes.

The program further includes a command for assigning the scene marker attributes to a scene marker corresponding to the query result.

The program further includes a command for, when the scene marker corresponding to the query result is pointed to, executing one or more feedbacks among sound, haptic, and visual feedbacks according to scene marker attributes.

An electronic device includes: one or more processors; a memory; and one or more programs stored in the memory and configured to be executed by the one or more processors. The program includes commands for setting contents to be searched for through a user input interface, setting a query for searching for a content of the contents to be searched for, detecting a partial content of the contents corresponding to the query by using description information related to the contents to be searched for, and displaying one or more detected query results based on a query matching degree.

The command for setting the query for searching for the content of the contents to be searched for includes a command for setting a query image; and extracting one or more query contents by image-analyzing the query image.

The command for setting the query image includes a command for pausing a video player, which is being played, and setting a screen of the paused video as the query image.

The command for setting the query image includes a command for capturing an image and linking the captured image through the user input interface with contents to be queried.

The command for capturing the image includes a command for setting an area including one or more images to be captured through the user input interface.

The command for capturing the image includes a command for setting an area of the image to at least partially capture one or more images in another area, which is not a position of the contents to be queried, through the user input interface.

The command for linking the captured image with the contents to be queried includes a command for moving the captured image on the contents to be queried.

The command for setting the query for searching for the content of the contents to be searched for includes a command for inputting a character through a key or a virtual keypad.

The command for setting the query for searching for the content of the contents to be searched for includes a command for receiving a voice signal, extracting text corresponding to the voice signal, and setting the extracted text as a query word.

The command for setting the query for searching for the content of the contents to be searched for includes a command for recording a music sound, extracting one or more pieces of metadata including at least a music title by recognizing the recorded music sound, and setting a query word by using the extracted metadata including at least the extracted music title.

The program includes a command for, before the inputting of the query, identifying whether there is image indexing information on the contents to be searched for or metadata in a local device, when there is no image indexing information on the contents to be searched for or the metadata in the local device, identifying whether there is the image indexing information or the metadata in a server or a remote device related to the contents, when there is the image indexing information or the metadata in the server or the remote device related to the contents, downloading description information including one or more pieces of the image indexing information and the metadata, when there is no image indexing information on the contents to be searched for or metadata in the local device and when there is no image indexing information or metadata in the server or the remote device related to the contents, generating the description information including one or more pieces of the image indexing information on the contents to be searched for and the metadata.

Although the embodiment has been described in the detailed description of the present invention, the present invention may be modified in various forms without departing from the scope of the present invention. Therefore, the scope of the present invention should not be defined as being limited to the embodiments, but should be defined by the appended claims and equivalents thereof.

## Claims

1. A method of searching for contents by an electronic device, the method comprising:
receiving an input of a query for searching for a content of the contents through a user interface;
detecting, as a result of the query, at least one partial content of the contents corresponding to the query by using description information related to the contents;
determining a position to display the result of the query;
determining a size of a scene marker corresponding to the result of the query or a size of an area to display the result of the query in consideration of at least one of a length of the partial content of the contents and a relative distance between the results of the query; and
at least partially displaying one or more results of the query according to the determined position and related size of the result of the query.

2. The method of claim 1, wherein the at least partially displaying of the one or more results of the query comprises displaying the one or more results of the query together with one or more progress bars, and displaying at least one of a scene marker, an image, and a sample scene video corresponding to the result of the query in at least one area of the progress bar, a boundary of the progress bar, and an adjacent area of the progress bar.

3. The method of claim 2, wherein at least one graphic attribute of the scene marker, such as a figure, a character, a symbol, a relative size, a length, a color, a shape, an angle, or an animation effect, is determined and displayed according to a length of the content of the contents corresponding to the result of the query or a matching degree of the query.

4. The method of claim 1, wherein the detecting of, as the result of the query, the at least one partial content comprises calculating a matching degree between the content of the query and the result of the query.

5. The method of claim 1, further comprising generating one or more images or sample scene videos corresponding to one or more results of the query and at least partially displaying the generated images or sample scene videos on a screen.

6. The method of claim 5, further comprising:
setting a priority of the image or sample scene video corresponding to the result of the query according to a length of each shot and scene, a matching degree of the query, a position of play-back/pause of the contents, and a distance between scene markers corresponding to the results of the query; and
determining at least one of a size of a window to display the image or sample scene video, a position, an overlap, whether to display the image or sample scene video, an animation, and a graphic attribute according to the priority.

7. The method of claim 2, further comprising displaying the results of the query separately at each position of a video track, an audio track, and a caption track.

8. The method of claim 1, wherein, if a distance between results of the query adjacent to each other is shorter than a predetermined reference, the method comprises at least one of overlapping the results of the query and combining and displaying the results of the query into one.

9. The method of claim 1, further comprising, if a distance between results of the query adjacent to each other is shorter than a predetermined reference, arranging the results of the query in consideration of a size of a display window such that some of the results of the query seperate each other at a predetermined rate or more.

10. The method of claim 1, further comprising, if a distance between results of the query adjacent to each other is shorter than a predetermined reference, performing a magnifying glass function for enlarging a corresponding part if an input event is detected through a user interface.

11. The method of claim 1, further comprising:
selecting one of the one or more results of the query; and
enlarging or reducing and displaying an image or sample scene video corresponding to the selected result of the query.

12. The method of claim 11, further comprising play-back the contents from a position corresponding to the selected result of the query or performing a full view of the image or sample scene video corresponding to the selected result of the query.

13. The method of claim 2, wherein, in a case of the scene marker displayed on the progress bar as the result of the query, an image or sample scene video related to the corresponding scene marker is displayed if the corresponding scene marker is pointed to, or, in a case of the image or sample scene video displayed as the result of the query, a scene marker related to the corresponding image or sample scene video is displayed if the corresponding image or sample scene video is pointed to.

14. The method of claim 2, further comprising, in a case of the image or sample scene video displayed as the result of the query, generating an input by a user interface and changing and displaying a size of the corresponding image or sample scene video according to an increase in a holding time of the input.

15. The method of claim 2, further comprising, in a case of the sample scene video displayed as the result of the query, play-back the corresponding sample scene video if an input by a user interface is detected.
